(19) Europäisches Patentamt
European Patent Office
Office européen des brevets

(11) **EP 3 899 470 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **19806225.9**

(22) Anmeldetag: **21.11.2019**

(51) Internationale Patentklassifikation (IPC):
**G01L 9/00** *(2006.01)* **G01L 9/14** *(2006.01)*
**G01L 19/00** *(2006.01)* **G01L 27/00** *(2006.01)*
**G01L 19/06** *(2006.01)*

(52) Gemeinsame Patentklassifikation (CPC):
**G01L 19/0046; G01L 9/0041; G01L 9/007;**
**G01L 9/14; G01L 19/0672; G01L 27/007**

(86) Internationale Anmeldenummer:
**PCT/EP2019/082029**

(87) Internationale Veröffentlichungsnummer:
**WO 2020/126278 (25.06.2020 Gazette 2020/26)**

(54) **DRUCKMESSAUFNEHMER MIT EINRICHTUNG ZUR AUSLENKUNG EINER TRENNMEMBRAN**

PRESSURE SENSOR WITH MEANS FOR DISPLACING AN ISOLATION DIAPHRAGM

CAPTEUR DE PRESSION AVEC MOYEN POUR DEPLACER UNE MEMBRANE ISOLANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133053**

(43) Veröffentlichungstag der Anmeldung:
**27.10.2021 Patentblatt 2021/43**

(73) Patentinhaber: **Endress+Hauser SE+Co. KG**
**79689 Maulburg (DE)**

(72) Erfinder:
• **LOPATIN, Sergey**
**79540 Lörrach (DE)**
• **GETMAN, Igor**
**79539 Lörrach (DE)**

(74) Vertreter: **Laufer, Michael et al**
**Endress + Hauser Group Services**
**(Deutschland) AG+Co. KG**
**Colmarer Straße 6**
**79576 Weil am Rhein (DE)**

(56) Entgegenhaltungen:
WO-A1-2005/026682    DE-A1- 3 106 835
DE-A1-102010 035 965    US-A- 3 492 872
US-A1- 2007 095 146

## Beschreibung

Die Erfindung betrifft einen Druckmessaufnehmer, mit

einem Drucksensor, und
einem dem Drucksensor vorgeschalteten Druckmittler, der eine Trennmembran umfasst, deren Außenseite mit einem Druck beaufschlagbar ist und unter der eine Druckempfangskammer eingeschlossen ist, und
einem an die Druckempfangskammer angeschlossenen, mit einer Druckübertragungsflüssigkeit gefüllten, hydraulischen Druckübertragungspfad, der den auf die Außenseite der Trennmembran einwirkenden Druck auf den Drucksensor überträgt.

Druckmessaufnehmer umfassen als Absolutdruckmessaufnehmer, als Relativdruckmessaufnehmer, sowie als Differenzdruckmessaufnehmer ausgebildete Messaufnehmer und werden zur Messung von Drücken eingesetzt.

Dabei ist es insb. in industriellen Anwendungen von besonderer Wichtigkeit, dass Druckmessaufnehmer eine gleichbleibend hohe Messgenauigkeit aufweisen und ggfs. auftretende Funktionsbeeinträchtigungen des Druckmessaufnehmers, insb. sich auf die Messgenauigkeit und/oder die Betriebssicherheit auswirkende Beeinträchtigungen, möglichst frühzeitig erkannt und behoben werden können. Hauptursachen für derartige Beeinträchtigungen sind Funktionsbeeinträchtigungen des Drucksensors, der Druckübertragungsflüssigkeit und der Trennmembran.

Eine Hauptursache für Funktionsbeeinträchtigungen von eine Messmembran aufweisenden Drucksensoren besteht darin, dass sich die Druckempfindlichkeit der Messmembran, z.B. durch Alterung oder durch Überbelastungen, mit der Zeit verändert. Diese Funktionsbeeinträchtigungen können z.B. auf die in der DE 10 2007 016 792 A1 oder in der DE 196 01 078 A1 beschriebene Weise erkannt werden, indem im Drucksensor ein Auslenkmittel zur Auslenkung der Messmembran integriert wird und die durch das Auslenkmittel bewirkte Auslenkung der Messmembran mittels eines elektromechanischen Wandlers erfasst wird. Hierüber lassen sich z.B. sich auf die Messgenauigkeit des Drucksensors auswirkende Veränderungen der Steifigkeit der Messmembran feststellen. Funktionsbeeinträchtigungen der Druckübertragungsflüssigkeit und der Trennmembran von Druckmessaufnehmern der eingangs genannten Art können hierüber jedoch nicht erkannt werden.

Funktionsbeeinträchtigungen der Trennmembran können z.B. durch Korrosion, Abrasion oder Versprödung der unter Umständen sehr harschen Prozessbedingungen ausgesetzten Trennmembran oder durch Ansatzbildung auf der Außenseite der Trennmembran verursacht werden. Diese Funktionsbeeinträchtigungen können z.B. auf die in der DE 10 2005 055 285 A1 beschriebene Weise erkannt werden. Dort ist ein die eingangs genannten Merkmale aufweisender Druckmessaufnehmer beschrieben. Dieser umfasst einen mittels einer Erregerschaltung angetriebenen hydraulischen Erreger, der dazu dient dem hydraulischen Druckübertragungspfad Druckschwankungen aufzuprägen. Zusätzlich umfasst der Messaufnehmer eine Auswertungseinheit, die eine Abhängigkeit des mittels des Drucksensors gemessenen Drucks von den aufgeprägten Druckschwankungen ermittelt und hieraus Rückschlüsse auf den Zustand der Trennmembran ableitet. Dabei wird ausgenutzt, dass sich Ansatzbildung auf der Außenseite der Trennmembran in unterschiedlicher Weise auf das Schwingungsverhalten der durch die Druckschwankungen zu erzwungenen Schwingungen angeregten Trennmembran auswirkt als die Steifigkeit der Trennmembran reduzierende Beeinträchtigungen, wie sie z.B. durch Korrosion oder Abrasion der Trennmembran verursacht werden.

Darüber hinaus ist in der DE 10 2005 055 285 A1 beschrieben, den Druckmessaufnehmer mit einen Auslenkungssensor auszustatten, mit dem die frequenzabhängige Auslenkung der Trennmembran gemessen wird. In dem Fall kann die Auswertungseinheit auch anhand der Abhängigkeit der gemessenen Auslenkungen der Trennmembran von den aufgeprägten Druckschwankungen Rückschlüsse auf den Zustand der Trennmembran ableiten.

Nachteilig ist hierbei jedoch, dass den durch den Erreger bewirkten Druckschwankungen der außen auf die Trennmembran einwirkende Druck entgegen wirkt. Das hat zur Folge, dass dieser Druck und die Eigenschaften des diesen Druck auf die Trennmembran ausübenden Mediums, z.B. dessen Dichte, Kompressibilität oder Zähigkeit, die in der DE 10 2005 055 285 A1 beschriebene Funktionsprüfung der Trennmembran beeinträchtigen und dementsprechend berücksichtigt werden sollten.

Ein weiterer Nachteil besteht darin, dass die Amplitude der aufgeprägten Druckschwankungen von den Druckübertragungseigenschaften der Druckübertragungsflüssigkeit abhängig ist. Letztere können sich jedoch unter Umständen im laufenden Betrieb verändern. Ursachen hierfür sind z.B. sich in der Flüssigkeit ausbildende Gasblasen, die zu einer erhöhten Kompressibilität der Druckübertragungsflüssigkeit führen. Gasblasen entstehen z.B. durch eine Zersetzung der Druckübertragungsflüssigkeit bei hohen Temperaturen oder durch in den Druckübertragungspfad eindringenden Wasserstoff, der z.B. durch Diffusion durch metallische Trennmembranen hindurch gelangt. Veränderungen der Druckübertragungseigenschaften der Druckübertragungsflüssigkeit führen zu einer Beeinträchtigung der mittels des Erregers ausführbaren Funktionsprüfung der Trennmembran, ohne dass sie als Funktionsbeeinträchtigungen der Druckübertragungsflüssigkeit erkennbar sind.

Um eine möglichst gleichbleibend hohe Messgenauigkeit von Druckmessaufnehmern sicher zu stellen, werden Druckmessaufnehmer heute in regelmäßigen Abständen kalibriert. Dabei wird die Trennmembran des Druckmessaufnehmers mit bekannten Drücken möglichst exakt vorgebbarer Größe beaufschlagt und die Messgenauigkeit des Druckmessaufnehmers anhand der während dieser Druckbeaufschlagungen vom Druckmessaufnehmer gemessenen Drücke überprüft. Die Druckbeaufschlagung der Trennmembran mit vorgegebenen Drücken exakt bestimmbarer Größe erfordert jedoch regelmäßig die Entfernung des Druckmessaufnehmer vom Einsatzort oder zumindest einen drastischen Eingriff in den am Einsatzort ablaufenden Prozess.

Aus dem Stand der Technik sind die WO 2005/026682 A1, die US 2007/095146 A1, die DE 10 2010 035965 A1, die US 3 492 872 A und die DE 31 06 835 A1 bekannt geworden. Die WO 2005/026682 A1 und die DE 10 2010 035965 A1 offenbaren jeweils einen Druckmessumformer mit einer Messkammer, die durch eine Trennmembran von einem zu messenden Medium getrennt ist. Die US 2007/095146 A1 offenbart einen ölgefüllten Drucksensor, bei dem der gemessene Druck auf eine nachgiebige Isoliermembran aufgebracht wird, wodurch der Druck des internen Öls ansteigt, bis er dem Außendruck entspricht. Die US 3 492 872 A offenbart einen Differenzdruckmessumformer und die DE 31 06 835 A1 offenbart eine Differenzdruck-Messeinheit.

Es ist eine Aufgabe der Erfindung einen Druckmessaufnehmer anzugeben, der es ermöglicht Funktionsbeeinträchtigungen des Druckmessaufnehmers, insb. sich auf die Messgenauigkeit und/oder die Betriebssicherheit auswirkende Beeinträchtigungen, frühzeitig zu erkennen, ohne dass der auf die Außenseite der Trennmembran wirkende Druck verändert und/oder die Eigenschaften des diesen Druck auf die Trennmembran ausübenden Mediums berücksichtigt werden müssen.

Hierzu umfasst die Erfindung einen Druckmessaufnehmer, mit

    einem Drucksensor,
    einem dem Drucksensor vorgeschalteten Druckmittler, der eine Trennmembran umfasst, deren Außenseite mit einem Druck beaufschlagbar ist und unter der eine Druckempfangskammer eingeschlossen ist, und
    einem an die Druckempfangskammer angeschlossenen, mit einer Druckübertragungsflüssigkeit gefüllten, hydraulischen Druckübertragungspfad, der den auf die Außenseite der Trennmembran einwirkenden Druck auf den Drucksensor überträgt, der sich dadurch auszeichnet, dass der Druckmittler eine elektronisch aktivierbare Auslenkeinrichtung umfasst, die derart ausgebildet ist, dass sie im aktivierten Zustand eine konstante, die Trennmembran auslenkende Kraft auf die Trennmembran oder ein mit der Trennmembran verbundenes Element ausübt, wobei die Trennmembran magnetisch oder ferromagnetisch ist oder mit einem magnetischen oder ferromagnetischen Element verbunden ist, und die Auslenkeinrichtung einen elektronisch aktivierbaren Elektromagnet umfasst, der im aktivierten Zustand die die Trennmembran auslenkende Kraft auf die Trennmembran oder das damit verbundene Element ausübt und wobei

    eine an den Elektromagneten anschließbare oder angeschlossene Auslenkungsmessschaltung umfasst, die derart ausgebildet ist, dass sie eine von dem auf die Trennmembran einwirkenden Druck abhängige Auslenkung der Trennmembran bei deaktivierter Auslenkeinrichtung anhand einer von der Auslenkung der Trennmembran abhängigen Eigenschaft des Elektromagneten, anhand einer Induktivität des Elektromagneten oder anhand einer von der Induktivität des Elektromagneten abhängigen Größe bestimmt, und
    eine Prüfeinrichtung umfasst, die derart ausgebildet ist, dass sie die Funktionsfähigkeit und/oder die Messgenauigkeit des Druckmessaufnehmer bei deaktivierter Auslenkeinrichtung anhand des mittels des Drucksensors gemessenen Druck und der parallel hierzu mittels der Auslenkungsmessschaltung ermittelten Auslenkung der Trennmembran überprüft.

Erfindungsgemäße Druckmessaufnehmer bieten den Vorteil, dass die mittels der Auslenkeinrichtung auf die Trennmembran oder das Element ausgeübte Kraft auf definierte und kontrollierbare Weise zugeschaltet werden kann und sich auf den gesamten Druckmessaufnehmer wie eine der vorgegebenen, konstanten Kraft entsprechende Druckänderung des auf die Außenseite der Trennmembran einwirkenden Drucks auswirkt. Da der gemessene Druck von den Eigenschaften der Trennmembran, der Druckübertragungsflüssigkeit und des Drucksensors abhängig ist, wirken sich Funktionsbeeinträchtigungen all dieser Komponenten unmittelbar auf die durch die Kraft bewirkte Veränderung des mittels des Drucksensors gemessenen Drucks aus und können somit anhand des gemessenen Drucks frühzeitig erkannt werden.

Da die Kraft unmittelbar auf die Trennmembran oder das damit verbundene Element ausgeübt wird, kann die Kraft auch dann noch in kontrollierter und definierter Weise vorgeben und ausgeübt werden, wenn sich die Druckübertragungseigenschaften der Druckübertragungsflüssigkeit in unbekannter Weise verändern. Im Unterschied zu den Amplituden von mittels eines Erregers auf den hydraulischen Druckübertragungspfad aufgeprägten Druckschwankungen ist die von der Auslenkeinrichtung auf die Trennmembran ausgeübte Kraft nicht von den Eigenschaften der Druckübertragungsflüssigkeit abhängig.

Da die durch die aktivierte Auslenkeinrichtung auf die Trennmembran ausgeübte Kraft konstant ist, ist die Wirkung dieser Kraft auf den gemessenen Druck weder von dem von außen auf die Trennmembran einwirkenden Druck noch von den Eigenschaften des diesen Druck auf die Außenseite der Trennmembran ausübenden Mediums abhängig. Entsprechend kann die Funktionsfähigkeit des Druckmessaufnehmers jederzeit überprüft werden, ohne dass der währenddessen auf die Außenseite der Trennmembran einwirkende Druck bekannt sein muss oder verändert werden muss, und ohne dass die Eigenschaften des Mediums die Überprüfung beeinträchtigen.

Eine erste Weiterbildung zeichnet sich dadurch aus, dass die Trennmembran zumindest abschnittweise oder insgesamt aus einem magnetischen Material, aus einem ferromagnetischen Material, aus einem ferromagnetischen Stahl, aus einem ferritischen Stahl, aus einem Duplex-Stahl oder aus einem Superduplex-Stahl besteht.

Eine zweite Weiterbildung zeichnet sich dadurch aus, dass das mit der Trennmembran verbundene magnetische oder ferromagnetische Element eine auf einer in die Druckempfangskammer hinein weisenden Innenseite der Trennmembran angeordnete angeordnete Scheibe umfasst, wobei die Scheibe

> a) aus einem magnetischen oder ferromagnetischen Material, aus einer magnetischen oder ferromagnetischen metallischen Legierung, aus einem ferromagnetischen Stahl, aus einem ferritischen Stahl, aus einem Duplex-Stahl, aus einem Superduplex-Stahl, aus Eisen, aus Gusseisen, aus einer magnetischen oder ferromagnetischen Keramik, aus einer ferritischen Keramik oder aus einem Eisenoxid besteht,
> b) als Beschichtung oder als galvanische Beschichtung auf die Trennmembran aufgebracht oder durch eine Fügung oder eine Lötung mit der Trennmembran verbunden ist,
> c) bei einer Materialstärke der Trennmembran von 25 $\mu$m bis 200 $\mu$m eine Scheibendicke von 0,1 $\mu$m bis 500 $\mu$m aufweist, bei einer Materialstärke der Trennmembran von 25 $\mu$m bis 100 $\mu$m eine Scheibendicke von 0,1 $\mu$m bis 300 $\mu$m aufweist oder bei einer Materialstärke der Trennmembran von 50 $\mu$m bis 200 $\mu$m eine Scheibendicke von 10 $\mu$m bis 500 $\mu$m aufweist, und/oder
> d) einen Durchmesser aufweist, der geringer als ein Durchmesser der Trennmembran ist und/oder bei einem Durchmesser der Trennmembran von 20 mm bis 90 mm einen Durchmesser von 2 mm bis 15 mm aufweist, wobei die Scheibe konzentrisch zur Trennmembran angeordnet ist.

Eine dritte Weiterbildung zeichnet sich dadurch aus, dass das mit der Trennmembran verbundene Element einen auf einer in die Druckempfangskammer hinein weisenden Innenseite der Trennmembran montierten Permanentmagnet umfasst.

Eine Weiterbildung der dritten Weiterbildung zeichnet sich dadurch aus, dass sich der Permanentmagnet in einen an die Druckempfangskammer angrenzenden Endbereich des Druckübertragungspfades hinein erstreckt, der außenseitlich zumindest abschnittweise von einer Spule des Elektromagneten umgeben ist.

Weiterbildungen zeichnen sich dadurch aus, dass

> der Elektromagnet im Druckmittler integriert ist,
> der Elektromagnet eine über eine elektronisch steuerbare Schalteinrichtung an eine Gleichstromquelle anschließbare Spule umfasst,
> die Spule derart ausgerichtet ist, dass eine Verlängerung von deren Längsachse parallel zur Flächennormale auf die Trennmembran durch die Mitte der Trennmembran hindurch verläuft,
> die Spule derart angeordnet ist, dass sie einen Abschnitt des von der Druckempfangskammer zum Drucksensor verlaufenden Druckübertragungspfads außenseitlich allseitig umgibt, und/oder
> der Elektromagnet einen zumindest abschnittweise von der Spule umgebenen hohlzylindrischen Kern umfasst, durch den ein in der Druckempfangskammer mündender Endbereich des hydraulischen Druckübertragungspfad hindurch verläuft.

Eine vierte Weiterbildung zeichnet sich dadurch aus, dass der Druckmessumformer eine Prüfeinrichtung umfasst, die dazu ausgebildet ist Funktionsprüfungen des Druckmessaufnehmers durchzuführen, bei denen die Auslenkeinrichtung jeweils für die Dauer eines vorgegeben Zeitraums aktiviert wird und die Prüfeinrichtung den Druckmessaufnehmer anhand des während der jeweiligen Funktionsprüfung mittels des Drucksensors gemessenen Drucks überprüft.

Eine Weiterbildung der vierten Weiterbildung zeichnet sich dadurch aus, dass

> die Prüfeinrichtung derart ausgebildet ist, dass sie anhand des während der jeweiligen Funktionsprüfung mittels des Drucksensors gemessenen Drucks eine auf die Aktvierung der Auslenkeinrichtung zurückzuführende, sprunghafte Druckänderung des gemessenen Drucks bestimmt, und
> die Prüfeinrichtung derart ausgebildet ist, dass sie

> > a) eine Funktionsbeeinträchtigung des Druckmessaufnehmers feststellt, wenn die Druckänderung von einem hierfür vorgegebenen Referenzwert um mehr als eine vorgegebene Toleranz abweicht, und/oder
> > b) anhand der Differenz zwischen der Druckänderung und dem Referenzwert eine Messgenauigkeit des Druckmessaufnehmers überprüft, eine Beeinträchtigung der Messgenauigkeit ausgibt, wenn der Betrag der Differenz einen vorgegebenen Grenzwert überschreitet, und/oder anhand des Betrags der Differenz einen Grad der Beeinträchtigung der Messgenauigkeit bestimmt und ausgibt.

Eine weitere Weiterbildung der vierten Weiterbildung zeichnet sich dadurch aus, dass

die Auslenkeinrichtung derart ausgebildet ist, dass sie im aktivierten Zustand eine die Trennmembran in Richtung deren Membranbett auslenkende, konstante Kraft ausübt,
die Prüfeinrichtung derart ausgebildet ist, dass sie anhand des während der jeweiligen Funktionsprüfung mittels des Drucksensors gemessenen Drucks eine als Druckanstieg ausgebildete, auf die Aktivierung der Auslenkeinrichtung zurückzuführende Druckänderung des gemessenen Druck bestimmt, und
die Prüfeinrichtung derart ausgebildet ist, dass sie:

a) eine reduzierte Steifigkeit der Trennmembran als eine mögliche Ursache einer Funktionsbeeinträchtigung ausgibt, wenn der Druckanstieg einen hierfür vorgegebenen Grenzwert überschreitet,
b) eine erhöhte Steifigkeit der Trennmembran als eine mögliche Ursache einer Funktionsbeeinträchtigung ausgibt, wenn der Druckanstieg einen hierfür vorgegebenen Grenzwert unterschreitet,
c) eine erhöhte Druckempfindlichkeit des Drucksensors und/oder eine reduzierte Steifigkeit einer Messmembran des Drucksensors als eine mögliche Ursache einer Funktionsbeeinträchtigung ausgibt, wenn der Druckanstieg einen hierfür vorgegebenen Grenzwert überschreitet, und/oder
d) eine reduzierte Kompressibilität der Druckübertragungsflüssigkeit als eine mögliche Ursache einer Funktionsbeeinträchtigung ausgibt, wenn der Druckanstieg einen hierfür vorgegebenen Grenzwert unterschreitet.

Eine weitere Weiterbildung der vierten Weiterbildung zeichnet sich dadurch aus, dass die Prüfeinrichtung derart ausgebildet ist, dass sie einen zeitlichen Verlauf des während der Funktionsprüfung gemessenen Drucks mit einem hierfür vorgegebenen Referenzverlauf vergleicht und/oder anhand des zeitlichen Verlaufs mindestens eine vom zeitlichen Verlauf abhängige Kenngröße ableitet und mit einem hierfür vorgegebenen Referenzwert vergleicht und eine Funktionsbeeinträchtigung erkennt, wenn der Verlauf von dem Referenzverlauf um mehr als ein vorgegebenes Maß abweicht und/oder die Kenngröße von dem Referenzwert um mehr als ein vorgegebenes Maß abweicht.

Eine weitere Weiterbildung der fünften Weiterbildung zeichnet sich dadurch aus, dass

die Auslenkeinrichtung derart ausgebildet ist, dass sie im aktivierten Zustand eine die Trennmembran in Richtung deren Membranbett auslenkende, konstante Kraft ausübt, und
die Prüfeinrichtung derart ausgebildet ist, dass sie eine Undichtigkeit des Druckmessaufnehmers erkennt und ausgibt, wenn der gemessene Druck während des Zeitraums ausgehend von einem Maximaldruck um mehr als einen vorgegebenen Wert absinkt.

Des Weiteren umfasst die Erfindung ein Verfahren zur Funktionsprüfung eines erfindungsgemäßen Druckmessaufnehmers das sich dadurch auszeichnet, dass mindestens eine Funktionsprüfung durchgeführt wird, bei der

die Auslenkeinrichtung für die Dauer eines vorgegeben Zeitraums aktiviert wird, und
die Funktion des Druckmessaufnehmers anhand des während der jeweiligen Funktionsprüfung mittels des Drucksensors gemessenen Drucks, anhand einer auf die Aktivierung der Auslenkeinrichtung zurückzuführenden sprunghaften Druckänderung des während der jeweiligen Funktionsprüfung mittels des Drucksensors gemessenen Drucks und/oder anhand eines zeitlichen Verlaufs des während derjeweiligen Funktionsprüfung mittels des Drucksensors gemessenen Drucks überprüft wird.

Eine Weiterbildung des Verfahrens zeichnet sich dadurch aus, dass bei mindestens einer Funktionsprüfung derart verfahren wird, dass

die Auslenkeinrichtung während des Zeitraums eine die Trennmembran in Richtung deren Membranbett auslenkende, konstante Kraft ausübt, und
bei dieser Funktionsprüfung:

a) die als Druckanstieg ausgebildete auf die Aktivierung der Auslenkeinrichtung zurückzuführende Druckänderung des gemessenen Drucks bestimmt wird, und

a1) eine reduzierte Steifigkeit der Trennmembran als eine mögliche Ursache einer Funktionsbeeinträchtigung bestimmt wird, wenn der Druckanstieg einen hierfür vorgegebenen Grenzwert überschreitet,
a2) eine erhöhte Steifigkeit der Trennmembran als eine mögliche Ursache einer Funktionsbeeinträchtigung bestimmt wird, wenn der Druckanstieg einen hierfür vorgegebenen Grenzwert unterschreitet,
a3) eine erhöhte Druckempfindlichkeit des Drucksensors und/oder eine reduzierte Steifigkeit einer Messmembran des Drucksensors als eine mögliche Ursache einer Funktionsbeeinträchtigung bestimmt wird, wenn der Druckanstieg einen hierfür vorgegebenen Grenzwert überschreitet,

a4) eine reduzierte Kompressibilität der Druckübertragungsflüssigkeit als eine mögliche Ursache einer Funktionsbeeinträchtigung bestimmt wird, wenn der Druckanstieg einen hierfür vorgegebenen Grenzwert unterschreitet, und/oder

b) eine Undichtigkeit des Druckmessaufnehmers erkannt wird, wenn der gemessene Druck während des Zeitraums ausgehend von einem Maximaldruck um mehr als einen vorgegebenen Wert absinkt.

Des Weiteren umfasst die Erfindung einen erfindungsgemäßen Druckmessaufnehmer der sich dadurch auszeichnet, dass

der Drucksensor ein Differenzdrucksensor ist, dem ein zweiter Druckmittler vorgeschaltet ist, der eine Trennmembran umfasst, deren Außenseite mit einem zweiten Druck beaufschlagbar ist und unter der eine Druckempfangskammer eingeschlossen ist, die an einen mit einer Druckübertragungsflüssigkeit gefüllten, hydraulischen Druckübertragungspfad angeschlossen ist, der den auf die Außenseite der Trennmembran einwirkenden zweiten Druck auf den Drucksensor überträgt,
der zweite Druckmittler eine elektronisch aktivierbare Auslenkeinrichtung umfasst, die derart ausgebildet ist, dass sie im aktivierten Zustand eine konstante, die Trennmembran des zweiten Druckmittlers auslenkende Kraft auf die Trennmembran oder ein mit der Trennmembran verbundenes Element ausübt, und
der Druckmessaufnehmer eine Prüfeinrichtung umfasst, die dazu ausgebildet ist Funktionsprüfungen des Druckmessaufnehmers durchzuführen, bei denen jeweils eine der beiden Auslenkeinrichtungen für die Dauer eines vorgegeben Zeitraums aktiviert wird und die Prüfeinrichtung den Druckmessaufnehmer anhand des während der jeweiligen Funktionsprüfung mittels des Drucksensors gemessenen Differenzdrucks, anhand einer auf die Aktivierung der jeweiligen Auslenkeinrichtung zurückzuführenden sprunghaften Druckänderung des während der jeweiligen Funktionsprüfung mittels des Drucksensors gemessenen Differenzdrucks und/oder anhand eines zeitlichen Verlaufs des während der jeweiligen Funktionsprüfung mittels des Drucksensors gemessenen Differenzdrucks überprüft.

Eine Weiterbildung des letztgenannten Druckmessaufnehmers zeichnet sich dadurch aus, dass

die Trennmembranen magnetisch oder ferromagnetisch sind oder mit einem magnetischen oder ferromagnetischen Element verbunden sind,
jede Auslenkeinrichtung jeweils einen elektronisch aktivierbaren Elektromagnet umfasst, der im aktivierten Zustand die die jeweilige Trennmembran auslenkende Kraft auf die Trennmembran oder das damit verbundene Element ausübt,
der Druckmessaufnehmer für jeden Elektromagnet jeweils eine an den Elektromagneten anschließbare oder angeschlossene Auslenkungsmessschaltung umfasst, die derart ausgebildet ist, dass sie eine von dem auf die Trennmembran einwirkenden Druck abhängige Auslenkung der Trennmembran bei deaktivierter Auslenkeinrichtung anhand einer von der Auslenkung der Trennmembran abhängigen Eigenschaft des Elektromagneten, anhand der Induktivität des Elektromagneten oder anhand einer von der Induktivität des Elektromagneten abhängigen Größe bestimmt, und
die Prüfeinrichtung derart ausgebildet ist, dass sie die Funktionsfähigkeit und/oder die Messgenauigkeit des Druckmessaufnehmers anhand des gemessenen Differenzdrucks und der Differenz der mittels der beiden Auslenkungsmessschaltungen gemessenen Auslenkungen der beiden Trennmembranen überprüft, während beide Auslenkeinrichtungen deaktiviert sind.

Die Erfindung und deren Vorteile werden nun anhand der Figuren der Zeichnung, in denen vier Ausführungsbeispiele dargestellt sind, näher erläutert. Gleiche Elemente sind in den Figuren mit gleichen Bezugszeichen versehen. Um Bauteile von zum Teil sehr unterschiedlicher Größe darstellen zu können, wurde eine nicht immer maßstabsgetreue Darstellung gewählt.

Fig. 1 zeigt:   einen Druckmessaufnehmer mit einem Druckmittler mit einer magnetischen oder ferromagnetischen Trennmembran;

Fig. 2 zeigt:   einen Druckmittler auf dessen Trennmembran eine magnetische oder ferromagnetische Scheibe angeordnet ist;

Fig. 3 zeigt:   einen Druckmittler mit einer mit einem Permanentmagnet verbundenen Trennmembran;

Fig. 4 zeigt:   eine im Rahmen einer Funktionsprüfung die Trennmembran auslenkende Kraft als Funktion der Zeit;

Fig. 5 zeigt:   einen im Rahmen einer Funktionsprüfung mit einem einwandfrei arbeitenden Druckmessaufnehmer gemessenen Druck als Funktion der Zeit;

Fig. 6 zeigt:   einen im Rahmen einer Funktionsprüfung mit einem eine Undichtigkeit aufweisenden Druckmessaufnehmer gemessenen Druck als Funktion der Zeit; und

Fig. 7 zeigt:   einen Differenzdruckmessaufnehmer.

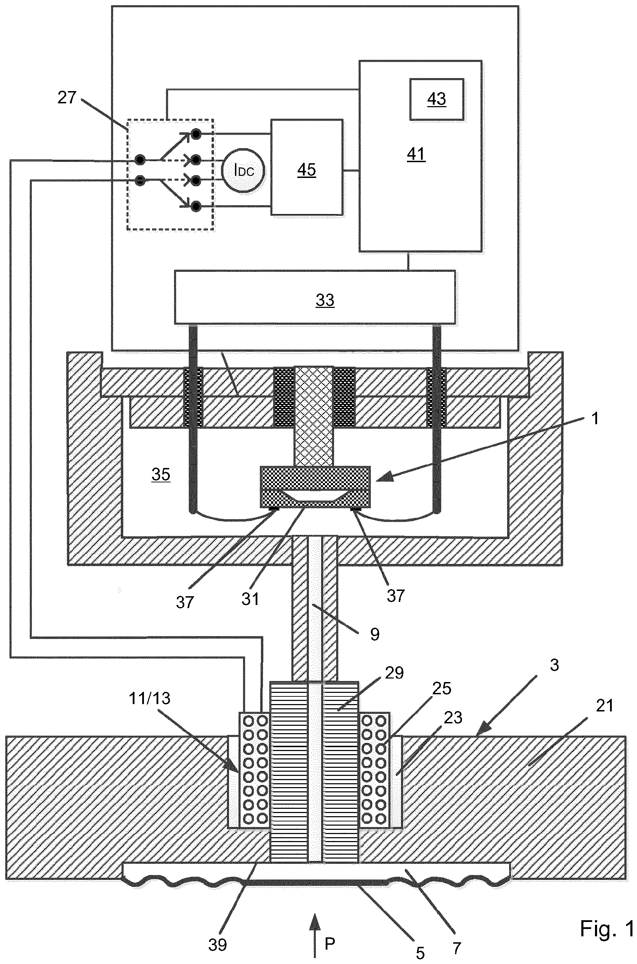

Fig. 1 zeigt ein Beispiel eines erfindungsgemäßen Druckmessaufnehmers, der einen Drucksensor 1 und einen dem Drucksensor 1 vorgeschalteten Druckmittler 3 umfasst. Der Druckmittler 3 umfasst eine Trennmembran 5, deren Außenseite mit einem vom Druckmessaufnehmer zu messenden Druck p beaufschlagbar ist. Unter der Trennmembran 5 ist eine Druckempfangskammer 7 eingeschlossen. An die Druckempfangskammer 7 ist ein mit einer Druckübertragungsflüssigkeit gefüllter, hydraulischer Druckübertagungspfad 9 angeschlossen, der den auf die Außenseite der Trennmembran 5 einwirkenden Druck p auf den Drucksensor 1 überträgt.

Erfindungsgemäße Druckmessaufnehmer zeichnen sich dadurch aus, dass deren Druckmittler 3 eine elektronisch aktivierbare Auslenkeinrichtung 11 umfasst, die derart ausgebildet ist, dass sie im aktivierten Zustand eine konstante, die Trennmembran 5 auslenkende Kraft Kauf die Trennmembran 5 oder ein mit der Trennmembran 5 verbundenes Element ausübt.

Erfindungsgemäße Druckmessaufnehmer weisen die eingangs genannten Vorteile auf. Dabei können einzelne Komponenten unterschiedliche für sich genommen oder auch in Kombination miteinander einsetzbare Ausgestaltungen aufweisen.

Fig. 1 zeigt ein Beispiel bei dem die Trennmembran 5 magnetisch oder ferromagnetisch ist und die Auslenkeinrichtung 11 einen elektronisch aktivierbaren Elektromagneten 13 umfasst, der im aktivierten Zustand die die Trennmembran 5 auslenkende Kraft Kauf die Trennmembran 5 ausübt. Bei dieser Ausführungsform besteht die Trennmembran 5 zumindest abschnittweise, vorzugsweise jedoch insgesamt aus einem magnetischen oder ferromagnetischen Material. Insoweit kann die Trennmembran 5 z.B. aus einer magnetischen Legierung, aus einer ferromagnetischen Legierung, aus einem ferromagnetischen Stahl, aus einem ferritischen Stahl, aus einem Duplex-Stahl oder aus einem Superduplex-Stahl bestehen.

Diese Ausführungsform bietet den Vorteil, dass zur Erzeugung der Kraft keine Komponenten erforderlich sind, die die Druckübertragungseigenschaften der Trennmembran 5 verändern, und dass die durch den aktivierten Elektromagneten 13 ausgeübte magnetische Anziehungs- oder Abstoßungskraft unmittelbar auf die Trennmembran 5 wirkt. Sie ist daher insb. für Druckmessaufnehmer besonders gut geeignet, mit denen vergleichsweise geringe, auf die Außenseite der Trennmembran 5 einwirkende Drücke p, wie z.B. Drücke von kleiner gleich 5 bar, gemessen werden und/oder die eine vergleichsweise hohe Messgenauigkeit aufweisen.

Alternativ kann die Trennmembran 5 mit einem magnetischen oder ferromagnetischen Element verbunden sein und die Auslenkeinrichtung 11 den elektronisch aktivierbaren Elektromagneten 13 umfassen, der im aktivierten Zustand die die Trennmembran 5 auslenkende Kraft Kauf das mit der Trennmembran 5 verbundene Element ausübt.

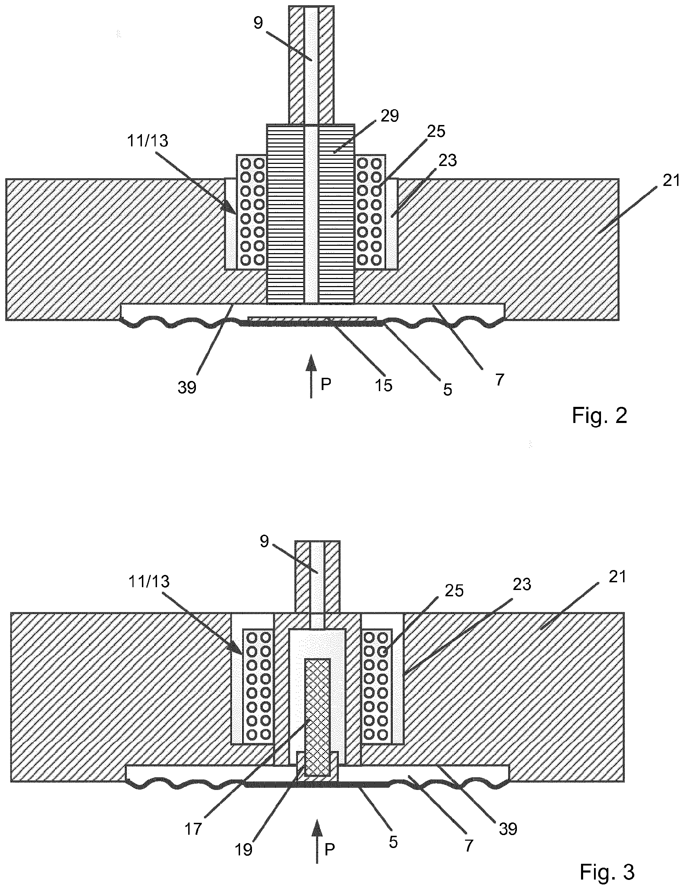

Fig. 2 zeigt als ein Beispiel hierzu einen anstelle des in Fig. 1 dargestellten Druckmittlers 3 einsetzbaren Druckmittler, bei dem auf einer in die Druckempfangskammer 7 hinein weisenden Innenseite der Trennmembran 5 eine mit der Trennmembran 5 verbundene magnetische oder ferromagnetische Scheibe 15 angeordnet ist. Diese Ausführungsform bietet den Vorteil, dass das Material der Trennmembran 5 innerhalb weiterer Grenzen frei wählbar ist und die Trennmembran 5 optional auch aus einem nicht magnetischen Material, wie z.B. einem Edelstahl, insb. einem austenitischen Edelstahl, bestehen kann.

Als Scheibe 15 eignet sich eine Scheibe 15 aus einem magnetischen oder ferromagnetischen Material. Insoweit kann die Scheibe 15 z.B. aus einer magnetischen oder ferromagnetischen metallischen Legierung, aus einem ferromagnetischen Stahl, aus einem ferritischen Stahl, aus einem Duplex-Stahl, aus einem Superduplex-Stahl, aus Eisen oder aus Gusseisen bestehen. Alternativ kann die Scheibe 15 aber auch aus einer magnetischen oder ferromagnetischen Keramik oder aus einer ferritischen Keramik, wie z.B. einem Eisenoxid, bestehen.

Die Scheibe 15 kann je nach Scheibendicke und Material der Scheibe 15, z.B. als Beschichtung, z.B. als galvanische Beschichtung, auf die Trennmembran 5 aufgebracht oder durch eine Fügung, wie z.B. eine Lötung, mit der Trennmembran 5 verbunden sein.

Alternativ oder zusätzlich hierzu weist die Scheibe 15 vorzugsweise eine Schichtdicke von 0,1 $\mu$m bis 500 $\mu$m auf. Im Vergleich dazu kann die Trennmembran 5 z.B. eine Materialstärke im Bereich von 25 $\mu$m bis 200 $\mu$m aufweisen. Dabei wird die Materialstärke der Trennmembran 5 vorzugsweise umso größer angesetzt, je größer die mittels des Druckmessaufnehmers zu messenden Drücke p sind. Insoweit weist die Scheibe 15 bei einer Materialstärke der Trennmembran 5 von 25 $\mu$m bis 100 $\mu$m vorzugsweise eine Scheibendicke von 0,1 $\mu$m bis 300 $\mu$m auf, wohingegen sie bei einer Materialstärke der Trennmembran 5 von 50 $\mu$m bis 200 $\mu$m vorzugsweise eine Scheibendicke von 10 $\mu$m bis 500 $\mu$m aufweist.

Grundsätzlich kann die Scheibe 15 bei vergleichsweise geringer Scheibendicke als vollflächige Beschichtung auf die Trennmembran 5 aufgebracht sein. Vorzugsweise weist die konzentrische zur Trennmembran 5 angeordnete Scheibe 15 jedoch einen Durchmesser auf, der geringer als ein Durchmesser der Trennmembran 5 ist. Insoweit weist die Scheibe 15 bei einem Durchmesser der Trennmembran 5 von 20 mm bis 90 mm vorzugsweise einen Durchmesser von 2 mm bis 15 mm auf. Diese Ausführungsform bietet den Vorteil, dass die Druckübertragungseigenschaften der Trennmembran 5 durch die hier lediglich mit einem mittleren Membranbereich der Trennmembran 5 verbundenen Scheibe 15 auch dann nur in vergleichsweise geringem Maße verändert werden, wenn die Scheibe 15 eine vergleichsweise große Scheibendicke aufweist und/oder die Scheibendicke größer als die Materialstärke der Trennmembran 5 ist.

Fig. 3 zeigt als weiteres Beispiel einen anstelle des in Fig. 1 dargestellten Druckmittlers 3 einsetzbaren Druckmittler, bei dem auf einer in die Druckempfangskammer 7 hinein weisenden Innenseite der Trennmembran 5 ein Permanentmagnet 17 montiert ist. Dieser Permanentmagnet 17 kann z.B. auf einer auf der Innenseite der Trennmembran 5 angeordneten, mit der Trennmembran 5 verbundenen Halterung 19 montiert sein.

Auch diese Ausführungsform bietet den Vorteil, dass die Trennmembran 5 optional aus einem nicht magnetischen Material, wie z.B. einem Edelstahl, insb. einem austenitischen Edelstahl, bestehen kann. Darüber hinaus bietet sie den Vorteil, dass über den mit der Trennmembran 5 verbundenen Permanentmagneten 17 mittels des Elektromagneten 13 sehr viel größere Kräfte auf die Trennmembran 5 ausgeübt werden können, als das bei den in Fig. 1 und 2 dargestellten Varianten möglich ist. Diese Ausführungsform ist daher insb. in Verbindung mit Druckmessaufnehmern zur Messung größerer Drücke von Vorteil, die entsprechend steife und/oder eine vergleichsweise große Materialstärke aufweisende Trennmembranen 5 aufweisen.

Unabhängig davon, ob die Trennmembran 5 magnetisch oder ferromagnetisch ist oder mit einem magnetischen oder ferromagnetischen Element, wie z.B. der in Fig. 2 dargestellten Scheibe 15 oder dem in Fig. 3 dargestellten Permanentmagnet 17, verbunden ist, ist der Elektromagnet 13 vorzugsweise im Druckmittler 3 integriert. Das spart Platz und bietet aufgrund des damit verbundenen geringen Abstands zwischen dem Elektromagnet 13 und der magnetischen oder ferromagnetischen Trennmembran 5 bzw. dem mit der Trennmembran 5 verbundenen magnetischen oder ferromagnetischen Element den Vorteil, dass durch den aktivierten Elektromagnet 13 aufgrund des geringen Abstands eine vergleichsweise große Kraft K auf die Trennmembran 5 ausgeübt werden kann.

Fig. 1 bis 3 zeigen hierzu Beispiele, bei denen der Druckmittler 3 einen Träger 21 umfasst, auf dessen Stirnseite die nach außen durch die Trennmembran 5 abgeschlossene Druckempfangskammer 7 angeordnet ist. Dort weist der Träger 21 auf dessen der Stirnseite gegenüberliegenden Rückseite eine Ausnehmung 23 auf, in die der Elektromagnet 13 oder zumindest ein Abschnitt des Elektromagneten 13 eingesetzt ist.

In den dargestellten Ausführungsbeispielen umfasst der Elektromagnet 13 jeweils eine Spule 25, die über eine in Fig. 1 dargestellte elektronisch steuerbare Schalteinrichtung 27 mit einer im Druckmessaufnehmer integrierten Gleichstromquelle $I_{DC}$ verbindbar ist. Die Aktivierung der Auslenkeinrichtung 11 erfolgt hier also jeweils, indem die Schalteinrichtung 27 derart angesteuert wird, dass die Spule 25 mit der Gleichstromquelle $I_{DC}$ verbunden ist.

Alternativ oder zusätzlich hierzu ist die Spule 25 ist vorzugsweise derart ausgerichtet, dass eine Verlängerung von deren Längsachse parallel zu einer Flächennormale auf die Trennmembran 5 durch die Mitte der Trennmembran 5 hindurch verläuft. Alternativ oder zusätzlich hierzu ist die Spule 25 vorzugsweise derart angeordnet, dass sie einen Abschnitt des von der Druckempfangskammer 7 zum Drucksensor 1 verlaufenden Druckübertragungspfads 9 außenseitlich allseitig umgibt.

Optional kann der Elektromagnet 13 einen die mittels des Elektromagneten 13 ausübbare Kraft erhöhenden, zumindest abschnittweise von der Spule 25 umgebenen Kern 29 umfassen. Bei dieser in Fig. 1 und 2 dargestellten Ausführungsform ist der Kern 29 vorzugsweise hohlzylindrisch und derart angeordnet, dass ein an die Druckempfangskammer 7 angrenzender Endbereich des hydraulischen Druckübertragungspfad 9 durch den Kern 29 hindurch verläuft.

Bei dem in Fig. 3 dargestellten Ausführungsbeispiel ist der Druckmittler 3 vorzugsweise derart ausgebildet, dass sich der Permanentmagnet 17 in einen an die Druckempfangskammer 7 angrenzenden Endbereich des Druckübertragungspfades 9 hinein erstreckt, der außenseitlich zumindest abschnittweise von der Spule 25 des Elektromagneten 13 umgeben ist.

Als Drucksensor 1 können aus dem Stand der Technik bekannt Drucksensoren eingesetzt werden, die je nach Art des Druckmessaufnehmers z.B. als Absolut-, Relativ- oder Differenzdrucksensor ausgebildet sind. Diese Drucksensoren umfassen regelmäßig eine mit dem zu messenden Druck zu beaufschlagende Messmembran 31 und einen elektromechanischen Wandler, z.B. einen kapazitiven oder resistiven Wandler, der die druckabhängige Auslenkung der Messmembran 31 in eine elektrische Größe umwandelt. Zusätzlich umfassen sie eine an den Wandler angeschlossene Druckmessschaltung 33, die die druckabhängige Größe messtechnisch erfasst und ein dem gemessenen Druck $p_{gem}$ entsprechendes Messsignal zur Verfügung stellt.

Fig. 1 zeigt hierzu ein Beispiel bei dem der Drucksensor 1 derart in einer an den Druckübertragungspfad 9 angeschlossenen, ebenfalls mit der Druckübertragungsflüssigkeit befüllten Druckmesskammer 35 angeordnet ist, dass auf die Außenseite der Messmembran 31 der in der Druckmesskammer 35 herrschende Druck einwirkt. Der hier als Beispiel dargestellte Drucksensor 1 ist als Absolutdrucksensor ausgebildet, dessen Wandler die in Fig. 1 dargestellten zu einer Brückenschaltung zusammengeschlossenen piezoresistiven Elemente 37 umfasst.

Erfindungsgemäße Druckmessaufnehmer bieten den Vorteil, dass deren Funktionsfähigkeit jederzeit anhand der Wirkung der durch die Aktivierung der Auslenkeinrichtung 11 zuschaltbaren, die Trennmembran 5 auslenkenden Kraft K auf den mittels des Drucksensors 1 gemessenen Druck $p_{gem}$ überprüfbar ist. Diese Funktionsprüfungen können zu vorgegebenen oder vorgebbaren Zeiten, z.B. auf Anfrage, ereignisgesteuert oder wiederkehrend, z.B. periodisch, ausgeführt werden.

Dabei ist es zur Durchführung von Funktionsprüfungen von Vorteil, die Auslenkseinrichtung 11 derart auszubilden, dass sie im aktivierten Zustand eine die Trennmembran 5 in Richtung deren Membranbett 39 auslenkende konstante Kraft K auf die Trennmembran 5 oder das damit verbundene Element ausübt. Alternativ wäre es aber auch möglich, die Auslenkeinrichtung 11 derart zu betreiben, dass die Trennmembran 5 durch die Kraft K in hierzu entgegengesetzter aus dem Membranbett 39 herausweisender Richtung nach außen ausgelenkt wird. Beide Kraftrichtungen können in den zuvor beschriebenen Ausführungsbeispielen durch eine dementsprechende Polung und Ausrichtung des Elektromagneten 13 realisiert werden.

Funktionsprüfungen können z.B. vom Anwender ausgeführt werden, indem der Anwender während der jeweiligen Funktionsprüfung die elektronische Aktivierung der Auslenkeinrichtung 11 auslöst und den Druckmessaufnehmer anhand des während der Funktionsprüfung gemessenen Drucks $p_{gem}$ überprüft.

Alternativ oder zusätzlich hierzu ist der Druckmessaufnehmer vorzugsweise derart ausgebildet, dass er selbsttätig Funktionsprüfungen ausführen kann. Hierzu umfasst der Druckmessaufnehmer eine Prüfeinrichtung 41 die dazu ausgebildet ist Funktionsprüfungen des Druckmessaufnehmers durchzuführen, bei denen die Auslenkeinrichtung 11 jeweils für die Dauer eines vorgeben Zeitraums T aktiviert wird und die Prüfeinrichtung 41 den Druckmessaufnehmer anhand des während der jeweiligen Funktionsprüfung mittels des Drucksensors 1 gemessenen Drucks $p_{gem}$ überprüft.

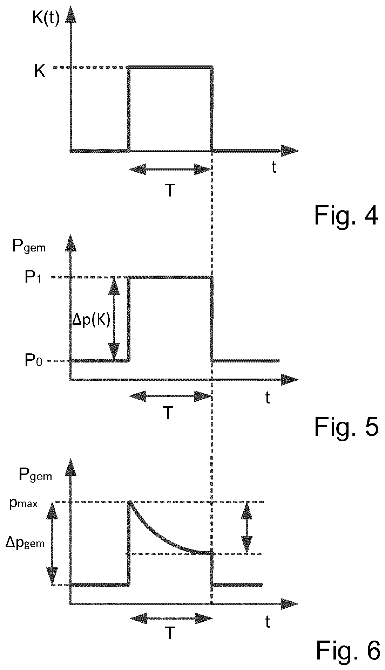

Während des Zeitraums T übt die Auslenkeinrichtung 11 die konstante Kraft K vorgegebener Größe auf die Trennmembran 5 aus. Fig. 4 zeigt hierzu die von der Auslenkeinrichtung 11 auf die Trennmembran 5 ausgeübte Kraft K(t) als Funktion der Zeit t in einem den Zeitraum T umfassenden Prüfungszeitraum. In diesem Prüfungszeitraum ist die Auslenkeinrichtung 11 vor und nach dem Zeitraum T deaktiviert, wobei sie im deaktiviertem Zustand keine Kraft auf die Trennmembran 5 ausübt. Während des Zeitraums T ist sie aktiviert und übt die konstant Kraft K vorgegebener Größe auf die Trennmembran 5 aus.

Dieses Vorgehen führt bei einwandfrei arbeitendem Druckmessaufnehmer dazu, dass der gemessene Druck $p_{gem}$ in dem Prüfungszeitraum den in Fig. 5 dargestellten zeitlichen Verlauf aufweist. Wie aus Fig. 5 ersichtlich weist der gemessene Drucks $p_{gem}$ vor und nach dem Zeitraum T jeweils einen dem von außen auf die Trennmembran 5 einwirkenden Druck p entsprechenden Wert $p_0$ auf und während des Zeitraums T einen von dem Druck p und der konstanten Kraft K abhängigen Wert $p_1$ auf.

Zur Funktionsprüfung des Druckmessaufnehmers können unterschiedliche Prüfverfahren eingesetzt werden, die mittels der jeweils dementsprechend ausgebildeten Prüfeinrichtung 41 anhand des gemessenen Drucks $p_{gem}$ durchführbar sind.

So kann z.B. ein Prüfverfahren ausgeführt werden, dass darauf basiert, dass das Aktivieren der Auslenkseinrichtung 11 eine von der Größe und der Richtung der Kraft K und den Eigenschaften des Druckmessaufnehmers abhängige sprunghafte Druckänderung $\Delta p_{gem}$ des gemessenen Drucks $p_{gem}$ bewirkt.

Diese Druckänderung $\Delta p_{gem}$ wird je nach Richtung der Kraft K anhand des maximalen oder des minimalen während es Zeitraums T gemessenen Drucks $p_{gem}$ bestimmt. Da die Kraft K während des Zeitraums T konstant ist, ist die auf diese Weise bestimmte Druckänderung $\Delta p_{gem}$ nicht von den Eigenschaften des auf die Außenseite der Trennmembran 5 einwirkenden Mediums abhängig. Zusätzlich ist der Zeitraums T vorzugsweise derart bemessen, dass er klein ist im Vergleich zu einer Zeitskala, auf der sich der auf die Außenseite der Trennmembran 5 einwirkende Druck p verändert.

Zur Ausführung dieses Prüfungsverfahrens ist die Prüfeinrichtung 41 derart ausgebildet, dass sie anhand des während der jeweiligen Funktionsprüfung mittels des Drucksensors 1 gemessenen Drucks $p_{gem}$ eine auf die Aktvierung der Auslenkeinrichtung 11 zurückzuführende sprunghafte Druckänderung $\Delta p_{gem}$ des gemessenen Druck $p_{gem}$ bestimmt und eine Funktionsbeeinträchtigung des Druckmessaufnehmers feststellt, wenn die Druckänderung $\Delta p_{gem}$ von einem hierfür vorgegebenen Referenzwert R um mehr als eine vorgegebene Toleranz abweicht. Dabei entspricht der Referenzwert R der bei fehlerfrei arbeitendem Druckmessaufnehmer zu erwartenden, in Fig. 5 eingezeichneten, sprunghaften Druckänderung $\Delta p(K) = p_1 - p_0$, die vorzugsweise vorab bestimmt und in einem der Prüfeinrichtung 41 zugeordneten Speicher 43 abgelegt wird.

Alternativ oder zusätzlich hierzu ist die Prüfeinrichtung 41 optional derart ausgebildet, dass sie anhand der Differenz zwischen der Druckänderung $\Delta p_{gem}$ und dem Referenzwert R die Messgenauigkeit des Druckmessaufnehmers überprüft. Insoweit kann sie z.B. derart ausgebildet sein, dass sie eine Beeinträchtigung der Messgenauigkeit ausgibt, wenn der Betrag der Differenz einen vorgegebenen Grenzwert überschreitet und/oder derart ausgebildet sein, dass sie anhand des Betrags der Differenz einen Grad der Beeinträchtigung der Messgenauigkeit bestimmt und ausgibt. Dabei ist der Grad der Beeinträchtigung umso größer, je größer der Betrag der Differenz ist.

Das Aktivieren der Auslenkeinrichtung 11 und die daraus resultierende Druckänderung $\Delta p_{gem}$ erfolgt sprunghaft und findet somit in einem Zeitraum statt, der kurz ist im Vergleich zu einer Zeitskala, auf der sich der auf die Außenseite der Trennmembran 5 einwirkende Druck p ändert. Außerdem wirkt die Kraft K auf den Druckmessaufnehmer genauso, wie es eine Veränderung des auf die Außenseite der Trennmembran 5 einwirkenden Drucks p tun würde. Entsprechend bildet die sprunghafte Druckänderung $\Delta p_{gem}$ eine von den Eigenschaften des Druckmessaufnehmers und der Kraft K abhängige Größe, anhand der Funktionsbeeinträchtigungen des Druckmessaufnehmer festgestellt und/oder dessen Messgenauigkeit überprüft werden kann, ohne dass der auf die Außenseite der Trennmembran 5 einwirkende Druck p oder dessen zeitliche Veränderungen berücksichtigt werden müssen.

Optional kann anhand der Abweichung der Druckänderung $\Delta p_{gem}$ von dem Referenzwert R zusätzlich eine Aussage über mögliche Ursachen der Funktionsbeeinträchtigung abgeleitet werden. Hierzu wird die Auslenkeinrichtung 11 vorzugsweise derart betrieben, dass sie die Trennmembran 5 im aktivierten Zustand in Richtung deren Membranbett 39 auslenkt. Entsprechend ist die im Rahmen der Funktionsprüfung bestimmte Druckänderung $\Delta p_{gem}$ ein Druckanstieg, dessen Abweichung von dem hierfür vorgegebenen Referenzwert R bestimmt wird. Bei der Ermittlung möglicher Ursachen der Funktionsbeeinträchtigung wird ausgenutzt, dass sich unterschiedliche Ursachen in unterschiedlicher Weise auf den durch die Aktivierung der Auslenkeinrichtung 11 bewirkten Druckanstieg auswirken.

Da der Drucksensor 1 durch den vorgeschalteten Druckmittler 3 geschützt ist, besteht eine Hauptursache von Funktionsbeeinträchtigungen des Drucksensors 1 darin, dass die Druckempfindlichkeit des Drucksensors 1 mit der Zeit zunimmt. Ursache hierfür sind insb. durch die fortlaufende Belastung und/oder durch Alterung auftretende Beeinträchtigungen, die dazu führen, dass die Steifigkeit der Messmembran 31 mit der Zeit abnimmt und dementsprechend durch einen darauf einwirkenden Druck in immer stärkerem Maße ausgelenkt wird. Entsprechend kann die Prüfeinrichtung 41 optional derart ausgebildet sein, dass sie eine erhöhte Druckempfindlichkeit des Drucksensors 1 und/oder eine reduzierte Steifigkeit der Messmembran 39 des Drucksensors 1 als eine mögliche Ursache einer Funktionsbeeinträchtigung ausgibt, wenn der im Rahmen einer Funktionsprüfung bestimmte Druckanstieg einen hierfür vorgegebenen Grenzwert überschreitet.

Wie eingangs erwähnt, besteht eine Hauptursache von Funktionsbeeinträchtigungen der Druckübertragungsflüssigkeit darin, dass sich deren Kompressibilität mit der Zeit, z.B. durch Gasblasenbildung oder eindringenden Wasserstoff, erhöht. Eine Erhöhung der Kompressibilität der Druckübertragungsflüssigkeit führt dazu, dass der von der Druckübertragungsflüssigkeit auf den Drucksensor 1 übertragene Druck bei einer Aktivierung der Auslenkeinrichtung 11 nur in geringerem Maße ansteigt, als das bei einer geringeren Kompressibilität der Fall wäre. Entsprechend kann die Prüfeinrichtung 41 optional derart ausgebildet sein, dass sie eine erhöhte Kompressibilität der Druckübertragungsflüssigkeit als eine mögliche Ursache einer Funktionsbeeinträchtigung ausgibt, wenn der im Rahmen einer Funktionsprüfung bestimmte Druckanstieg einen hierfür vorgegebenen Grenzwert unterschreitet.

Der mit dem Drucksensor 1 gemessene Druck $p_{gem}$ ist sowohl im Messbetrieb als auch im Rahmen der Funktionsprüfungen abhängig von dem von außen auf die Trennmembran 5 einwirkenden Druck p und der Steifigkeit C der Trennmembran 5. Diese Abhängigkeit lässt sich näherungsweise durch die folgende Beziehung beschreiben:

$$p_{gem} = \frac{K_1 P}{1 + K_2 C}$$

wobei K1 und K2 nicht von den Eigenschaften der Trennmembran 5 abhängige Konstanten sind. Nimmt die Steifigkeit der Trennmembran 5 ab, so wird sie durch die mittels der Auslenkeinrichtung 11 darauf ausgeübten Kraft K stärker ausgelenkt. Das führt dazu, dass der durch die Aktivierung der Auslenkeinrichtung 11 bewirkte Druckanstieg des gemessenen Drucks $p_{gem}$ entsprechend größer ausfällt. Umgekehrt führt eine Erhöhung der Steifigkeit der Trennmembran 5 dazu, dass der durch die Kraft K bewirkte Druckanstieg des gemessenen Drucks $p_{gem}$ entsprechend geringer ausfällt.

Entsprechend kann die Prüfeinrichtung 41 optional derart ausgebildet sein, dass sie eine reduzierte Steifigkeit der Trennmembran 5 als eine mögliche Ursache einer Funktionsbeeinträchtigung ausgibt, wenn der Druckanstieg einen hierfür vorgegebenen Grenzwert überschreitet, und/oder eine erhöhte Steifigkeit der Trennmembran 5 als eine mögliche Ursache einer Funktionsbeeinträchtigung ausgibt, wenn der Druckanstieg einen hierfür vorgegebenen Grenzwert unterschreitet.

Alternativ oder zusätzlich zu der auf die Aktivierung der Auslenkeinrichtung 11 zurückzuführenden Druckänderung $\Delta p_{gem}$ des gemessenen Drucks $p_{gem}$, kann auch der zeitliche Verlauf des während der Funktionsprüfung gemessenen Drucks $p_{gem}$ zur Funktionsprüfung herangezogen werden. Hierzu ist die Prüfeinrichtung 41 optional derart ausgebildet, dass sie den zeitlichen Verlauf des während der Funktionsprüfung gemessenen Drucks $p_{gem}$ mit einem hierfür vorgegebenen Referenzverlauf vergleicht und/oder anhand des zeitlichen Verlaufs mindestens eine vom zeitlichen Verlauf abhängige Kenngröße ableitet und mit einem hierfür vorgegebenen Referenzwert vergleicht. Zusätzlich ist die Prüfeinrichtung 13 vorzugsweise derart ausgebildet, dass sie eine Funktionsbeeinträchtigung erkennt und ausgibt, wenn der Verlauf von dem Referenzverlauf um mehr als ein vorgegebenes Maß abweicht und/oder die Kenngröße von dem Referenzwert um mehr als ein vorgegebenes Maß abweicht. Hierüber können Funktionsbeeinträchtigungen erkannt werden, die sich auf den zeitlichen Verlauf des gemessenen Drucks $p_{gem}$ auswirken.

Hierzu zählen insb. Undichtigkeiten, wie z.B. Undichtigkeiten des Druckübertragungspfads 9, der Messmembran 31 oder der Trennmembran 5, durch die Druckübertragungsflüssigkeit hindurch treten kann. Um eine solche Undichtigkeit erkennen zu können wird die Auslenkeinrichtung 11 vorzugsweise jeweils für die Dauer des vorgegebenen Zeitraums T aktiviert und ist vorzugsweise derart ausgebildet, dass sie im aktivierten Zustand eine die Trennmembran 5 in Richtung deren Membranbett 39 auslenkende Kraft K auf die Trennmembran 5 bzw. das mit der Trennmembran 5 verbundene Element ausübt. Zusätzlich wird der Zeitraum T derart vorgegeben, dass er klein ist, im Vergleich zu einer Zeitskala, auf der sich der auf die Außenseite der Trennmembran 5 einwirkende Druck p ändert. Geht man davon aus, dass der auf die Trennmembran 5 einwirkende Druck p während des Zeitraums T zumindest näherungsweise konstant ist, so ist bei einwandfrei funktionierenden Druckmessaufnehmer davon auszugehen, dass auch der während des Zeitraums T gemessene Drucks $p_{gem}$ einen im Wesentlichen konstanten Wert aufweist. Weist der Druckmessaufnehmer eine Undichtigkeit auf, so führt das dazu, dass der während der Funktionsprüfung gemessene Druck $p_{gem}$ einen sprunghaften auf die Aktivierung der Auslenkeinrichtung 11 zurückzuführenden Druckanstieg aufweist und anschließend aufgrund der nach und nach durch die Undichtigkeit hindurchtretenden Druckübertragungsflüssigkeit während Zeitraums T stetig abnimmt. Ein Beispiel eines solchen zeitlichen Verlaufs des gemessenen Drucks $p_{gem}$ ist in Fig. 6 dargestellt.

Entsprechend kann die Prüfeinrichtung 11 optional derart ausgebildet sein, dass sie eine Undichtigkeit des Druckmessaufnehmers erkennt und ausgibt, wenn der gemessene Druck $p_{gem}$ während des Zeitraums T ausgehend von einem Maximaldruck $p_{max}$ um mehr als einen hierfür vorgegebenen Wert absinkt. Hierüber können umso kleinere Undichtigkeiten erkannt werden, je länger der Zeitraum T ist, über den hinweg die Auslenkeinrichtung 11 aktiviert wird. Entsprechend wird der Zeitraum T vorzugsweise derart bemessen, dass er einerseits möglichst lang ist, um auch sehr kleine Lecks zuverlässig erkennen zu können, und andererseits klein ist im Vergleich zu einer Zeitskala auf der sich der von außen auf die Trennmembran 5 einwirkende Druck p verändert. Ändert sich der Druck p um weniger als 1 mbar pro Sekunde, so kann z.B. ein Zeitraum T von 5 Sekunden bis 30 Sekunden angesetzt werden.

Die Elektromagneten 13 umfassende erfindungsgemäße Druckmessaufnehmer weisen zusätzlich eine an den Elektromagneten 13 anschließbare oder angeschlossene Auslenkungsmessschaltung 45 auf, die derart ausgebildet ist, dass sie die von dem auf die Trennmembran 5 einwirkenden Druck p abhängige Auslenkung der Trennmembran 5 bei deaktivierter Auslenkeinrichtung 11 anhand einer von der Auslenkung der Trennmembran 5 abhängigen Eigenschaft des Elektromagneten 13, wie z.B. dessen Induktivität L oder einer von dessen Induktivität L abhängigen Größe, bestimmt. Fig.1 zeigt hierzu ein Ausführungsbeispiel, bei dem die Spule 25 über die elektronisch steuerbare Schalteinrichtung 27 zur Ausführung einer mittels der Auslenkeinrichtung 11 auszuführenden Funktionsprüfung an die Gleichstromquelle $I_{DC}$ anschließbar ist und zur Ausführung einer anhand der mittels der Auslenkungsmessschaltung 45 gemessenen Auslenkung der Trennmembran 5 auszuführenden Prüfung an die Auslenkungsmessschaltung 45 anschließbar ist.

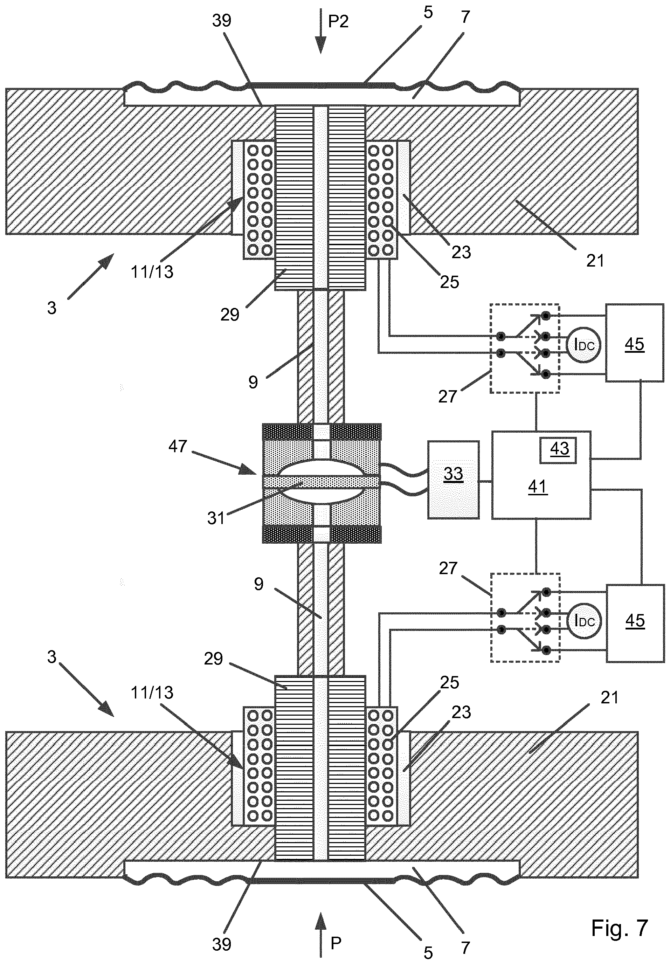

Die Prüfeinrichtung 41 ist derart ausgebildet, dass sie die Funktionsfähigkeit und/oder die Messgenauigkeit des Druckmessaufnehmer bei deaktivierter Auslenkeinrichtung 11 anhand des mittels des Drucksensors 1 gemessenen Druck $p_{gem}$ und der parallel hierzu mittels der Auslenkungsmessschaltung 45 ermittelten Auslenkung der Trennmembran 5 überprüft. Die Erfindung ist völlig analog auch in Verbindung mit als Differenzdruckmessaufnehmer ausgebildeten Druckmessaufnehmern einsetzbar. In dem Fall ist der Drucksensor 47 als Differenzdrucksensor ausgebildet, dem zusätzlich ein zweiter Druckmittler 3 vorgeschaltet ist, der eine Trennmembran 5 umfasst, deren Außenseite mit einem zweiten Druck p2 beaufschlagbar ist und unter der eine Druckempfangskammer 7 eingeschlossen ist. Auch an diese Druckempfangskammer 7 ist ein mit einer Druckübertragungsflüssigkeit gefüllter, hydraulischer Druckübertragungspfad 9 angeschlossen, der den auf die Außenseite der Trennmembran 5 des zweiten Druckmittlers 3 einwirkenden zweiten Druck p2 auf den Drucksensor 47 überträgt. Ein Beispiel hierzu ist in Fig. 7 dargestellt. Dabei umfasst mindestens einer der beiden Druckmittler 3 eine auf die zuvor beschriebene Weise ausgebildete Auslenkeinrichtung 11. Auch die Funktionsprüfung dieser Druckmessaufnehmer kann vom Anwender oder mittels der Prüfeinrichtung 41 auf die oben beschriebene Weise ausgeführt werden, indem jeweils eine der Auslenkeinrichtungen 11 aktiviert wird und der Druckmessaufnehmer anhand einer auf die Aktivierung der jeweiligen Auslenkeinrichtung 11 zurückzuführenden sprunghaften Druckänderung des während der jeweiligen Funktionsprüfung gemessenen Differenzdrucks und/oder anhand eines zeitlichen Verlaufs des während der jeweiligen Funktionsprüfung gemessenen Differenzdrucks überprüft wird.

Analog zu dem zuvor beschriebenen Ausführungsbeispiel können auch hier optional zwei jeweils einen an eine zugehörige, auf die oben beschriebene Weise ausgebildete Auslenkungsmessschaltung 45 anschließbare Elektromagneten 13 umfassende Auslenkeinrichtungen 11 eingesetzt werden. In dem Fall ist die Prüfeinrichtung 41 vorzugsweise derart ausgebildet, dass sie die Funktion des Druckmessaufnehmers anhand des gemessenen Differenzdrucks und der Differenz der mittels der beiden Auslenkungsmessschaltungen 45 gemessenen Auslenkungen der beiden Trennmembranen 5 überprüft, während beide Auslenkeinrichtungen 11 deaktiviert sind.

**Patentansprüche**

1.  Druckmessaufnehmer, mit

    einem Drucksensor (1, 47),
    einem dem Drucksensor (1, 47) vorgeschalteten Druckmittler (3), der eine Trennmembran (5) umfasst, deren Außenseite mit einem Druck (p) beaufschlagbar ist und unter der eine Druckempfangskammer (7) eingeschlossen ist, und einem an die Druckempfangskammer (7) angeschlossenen, mit einer Druckübertragungsflüssigkeit gefüllten, hydraulischen Druckübertragungspfad (9), der den auf die Außenseite der Trennmembran (5) einwirkenden Druck (p) auf den Drucksensor (1,47) überträgt, wobei

der Druckmittler (3) eine elektronisch aktivierbare Auslenkeinrichtung (11) umfasst, die derart ausgebildet ist, dass sie im aktivierten Zustand eine konstante, die Trennmembran (5) auslenkende Kraft auf die Trennmembran (5) oder ein mit der Trennmembran (5) verbundenes Element ausübt, wobei

die Trennmembran (5) magnetisch oder ferromagnetisch ist oder mit einem magnetischen oder ferromagnetischen Element verbunden ist, und

die Auslenkeinrichtung (11) einen elektronisch aktivierbaren Elektromagnet (13) umfasst, der im aktivierten Zustand die die Trennmembran (5) auslenkende Kraft (K) auf die Trennmembran (5) oder das damit verbundene Element ausübt, **dadurch gekennzeichnet, dass**

eine an den Elektromagneten (13) anschließbare oder angeschlossene Auslenkungsmessschaltung (45) umfasst, die derart ausgebildet ist, dass sie eine von dem auf die Trennmembran (5) einwirkenden Druck (p) abhängige Auslenkung der Trennmembran (5) bei deaktivierter Auslenkeinrichtung (11) anhand einer von der Auslenkung der Trennmembran (5) abhängigen Eigenschaft des Elektromagneten (13), anhand einer Induktivität (L) des Elektromagneten (13) oder anhand einer von der Induktivität (L) des Elektromagneten (13) abhängigen Größe bestimmt, und

eine Prüfeinrichtung (41) umfasst, die derart ausgebildet ist, dass sie die Funktionsfähigkeit und/oder die Messgenauigkeit des Druckmessaufnehmer bei deaktivierter Auslenkeinrichtung (11) anhand des mittels des Drucksensors (1) gemessenen Druck ($p_{gem}$) und der parallel hierzu mittels der Auslenkungsmessschaltung (45) ermittelten Auslenkung der Trennmembran (5) überprüft.

2. Druckmessaufnehmer gemäß Anspruch 1, **dadurch gekennzeichnet, dass** die Trennmembran (5) zumindest abschnittweise oder insgesamt aus einem magnetischen Material, aus einem ferromagnetischen Material, aus einem ferromagnetischen Stahl, aus einem ferritischen Stahl, aus einem Duplex-Stahl oder aus einem Superduplex-Stahl besteht.

3. Druckmessaufnehmer gemäß Anspruch 1, **dadurch gekennzeichnet, dass** das mit der Trennmembran (5) verbundene magnetische oder ferromagnetische Element eine auf einer in die Druckempfangskammer (7) hinein weisenden Innenseite der Trennmembran (5) angeordnete Scheibe (15) umfasst, wobei die Scheibe (15)

a) aus einem magnetischen oder ferromagnetischen Material, aus einer magnetischen oder ferromagnetischen metallischen Legierung, aus einem ferromagnetischen Stahl, aus einem ferritischen Stahl, aus einem Duplex-Stahl, aus einem Superduplex-Stahl, aus Eisen, aus Gusseisen, aus einer magnetischen oder ferromagnetischen Keramik, aus einer ferritischen Keramik oder aus einem Eisenoxid besteht,

b) als Beschichtung oder als galvanische Beschichtung auf die Trennmembran (5) aufgebracht oder durch eine Fügung oder eine Lötung mit der Trennmembran (5) verbunden ist,

c) bei einer Materialstärke der Trennmembran (5) von 25 $\mu$m bis 200 $\mu$m eine Scheibendicke von 0,1 $\mu$m bis 500 $\mu$m aufweist, bei einer Materialstärke der Trennmembran (5) von 25 $\mu$m bis 100 $\mu$m eine Scheibendicke von 0,1 $\mu$m bis 300 $\mu$m aufweist oder bei einer Materialstärke der Trennmembran (5) von 50 $\mu$m bis 200 $\mu$m eine Scheibendicke von 10 $\mu$m bis 500 $\mu$m aufweist, und/oder

d) einen Durchmesser aufweist, der geringer als ein Durchmesser der Trennmembran (5) ist und/oder bei einem Durchmesser der Trennmembran (5) von 20 mm bis 90 mm einen Durchmesser von 2 mm bis 15 mm aufweist, wobei die Scheibe (15) konzentrisch zur Trennmembran (5) angeordnet ist.

4. Druckmessaufnehmer gemäß Anspruch 1, **dadurch gekennzeichnet, dass** das mit der Trennmembran (5) verbundene Element einen auf einer in die Druckempfangskammer (7) hinein weisenden Innenseite der Trennmembran (5) montierten Permanentmagnet (17) umfasst.

5. Druckmessaufnehmer gemäß Anspruch 4, **dadurch gekennzeichnet, dass** sich der Permanentmagnet (17) in einen an die Druckempfangskammer (7) angrenzenden Endbereich des Druckübertragungspfades (9) hinein erstreckt, der außenseitlich zumindest abschnittweise von einer Spule (25) des Elektromagneten (15) umgeben ist.

6. Druckmessaufnehmer gemäß Anspruch 1 bis 5, **dadurch gekennzeichnet, dass**

der Elektromagnet (13) im Druckmittler (3) integriert ist,

der Elektromagnet (13) eine über eine elektronisch steuerbare Schalteinrichtung (27) an eine Gleichstromquelle ($I_{DC}$) anschließbare Spule (25) umfasst,

die Spule (25) derart ausgerichtet ist, dass eine Verlängerung von deren Längsachse parallel zur Flächennormale auf die Trennmembran (5) durch die Mitte der Trennmembran (5) hindurch verläuft,

die Spule (25) derart angeordnet ist, dass sie einen Abschnitt des von der Druckempfangskammer (7) zum Drucksensor (1, 47) verlaufenden Druckübertragungspfads (9) außenseitlich allseitig umgibt, und/oder

der Elektromagnet (13) einen zumindest abschnittweise von der Spule (25) umgebenen hohlzylindrischen Kern (29) umfasst, durch den ein in der Druckempfangskammer (9) mündender Endbereich des hydraulischen Druckübertragungspfad (9) hindurch verläuft.

7. Druckmessaufnehmer gemäß Anspruch 1 bis 6, **dadurch gekennzeichnet, dass** der Druckmessumformer eine Prüfeinrichtung (41) umfasst, die dazu ausgebildet ist Funktionsprüfungen des Druckmessaufnehmers durchzuführen, bei denen die Auslenkeinrichtung (11) jeweils für die Dauer eines vorgeben Zeitraums (T) aktiviert wird und die Prüfeinrichtung (41) den Druckmessaufnehmer anhand des während der jeweiligen Funktionsprüfung mittels des Drucksensors (1, 47) gemessenen Drucks ($p_{gem}$) überprüft.

8. Druckmessaufnehmer gemäß Anspruch 7, **dadurch gekennzeichnet, dass**

die Prüfeinrichtung (41) derart ausgebildet ist, dass sie anhand des während der jeweiligen Funktionsprüfung mittels des Drucksensors (1, 47) gemessenen Drucks ($p_{gem}$) eine auf die Aktivierung der Auslenkeinrichtung (13) zurückzuführende, sprunghafte Druckänderung ($\Delta p_{gem}$) des gemessenen Drucks ($p_{gem}$) bestimmt, und die Prüfeinrichtung (41) derart ausgebildet ist, dass sie

a) eine Funktionsbeeinträchtigung des Druckmessaufnehmers feststellt, wenn die Druckänderung ($\Delta p_{gem}$) von einem hierfür vorgegebenen Referenzwert (R) um mehr als eine vorgegebene Toleranz abweicht, und/oder
b) anhand der Differenz zwischen der Druckänderung ($\Delta p_{gem}$) und dem Referenzwert (R) eine Messgenauigkeit des Druckmessaufnehmers überprüft, eine Beeinträchtigung der Messgenauigkeit ausgibt, wenn der Betrag der Differenz einen vorgegebenen Grenzwert überschreitet, und/oder anhand des Betrags der Differenz einen Grad der Beeinträchtigung der Messgenauigkeit bestimmt und ausgibt.

9. Druckmessaufnehmer gemäß Anspruch 7 bis 8, **dadurch gekennzeichnet, dass**

die Auslenkeinrichtung (11) derart ausgebildet ist, dass sie im aktivierten Zustand eine die Trennmembran (5) in Richtung deren Membranbett (39) auslenkende, konstante Kraft (K) ausübt,

die Prüfeinrichtung (41) derart ausgebildet ist, dass sie anhand des während der jeweiligen Funktionsprüfung mittels des Drucksensors (1) gemessenen Drucks ($p_{gem}$) eine als Druckanstieg ausgebildete, auf die Aktivierung der Auslenkeinrichtung (11) zurückzuführende Druckänderung ($\Delta p_{gem}$) des gemessenen Druck ($p_{gem}$) bestimmt, und

die Prüfeinrichtung (41) derart ausgebildet ist, dass sie:

a) eine reduzierte Steifigkeit der Trennmembran (5) als eine mögliche Ursache einer Funktionsbeeinträchtigung ausgibt, wenn der Druckanstieg einen hierfür vorgegebenen Grenzwert überschreitet,
b) eine erhöhte Steifigkeit der Trennmembran (5) als eine mögliche Ursache einer Funktionsbeeinträchtigung ausgibt, wenn der Druckanstieg einen hierfür vorgegebenen Grenzwert unterschreitet,
c) eine erhöhte Druckempfindlichkeit des Drucksensors (1) und/oder eine reduzierte Steifigkeit einer Messmembran (31) des Drucksensors (1) als eine mögliche Ursache einer Funktionsbeeinträchtigung ausgibt, wenn der Druckanstieg einen hierfür vorgegebenen Grenzwert überschreitet, und/oder
d) eine reduzierte Kompressibilität der Druckübertragungsflüssigkeit als eine mögliche Ursache einer Funktionsbeeinträchtigung ausgibt, wenn der Druckanstieg einen hierfür vorgegebenen Grenzwert unterschreitet.

10. Druckmessaufnehmer gemäß Anspruch 7 bis 9, **dadurch gekennzeichnet, dass** die Prüfeinrichtung (41) derart ausgebildet ist, dass sie einen zeitlichen Verlauf des während der Funktionsprüfung gemessenen Drucks ($p_{gem}$) mit einem hierfür vorgegebenen Referenzverlauf vergleicht und/oder anhand des zeitlichen Verlaufs mindestens eine vom zeitlichen Verlauf abhängige Kenngröße ableitet und mit einem hierfür vorgegebenen Referenzwert vergleicht und eine Funktionsbeeinträchtigung erkennt, wenn der Verlauf von dem Referenzverlauf um mehr als ein vorgegebenes Maß abweicht und/oder die Kenngröße von dem Referenzwert um mehr als ein vorgegebenes Maß abweicht.

11. Druckmessaufnehmer gemäß Anspruch 7 bis 10, **dadurch gekennzeichnet, dass**

die Auslenkeinrichtung (11) derart ausgebildet ist, dass sie im aktivierten Zustand eine die Trennmembran (5) in Richtung deren Membranbett (39) auslenkende, konstante Kraft (K) ausübt, und
die Prüfeinrichtung (41) derart ausgebildet ist, dass sie eine Undichtigkeit des Druckmessaufnehmers erkennt und ausgibt, wenn der gemessene Druck ($p_{gem}$) während des Zeitraums (T) ausgehend von einem Maximaldruck ($p_{max}$) um mehr als einen vorgegebenen Wert absinkt.

12. Verfahren zur Funktionsprüfung eines Druckmessaufnehmer gemäß Anspruch 1 bis 11, **dadurch gekennzeichnet, dass** mindestens eine Funktionsprüfung durchgeführt wird, bei der

die Auslenkeinrichtung (11) für die Dauer eines vorgegeben Zeitraums (T) aktiviert wird, und
die Funktion des Druckmessaufnehmers anhand des während der jeweiligen Funktionsprüfung mittels des Drucksensors (1, 47) gemessenen Drucks ($p_{gem}$), anhand einer auf die Aktivierung der Auslenkeinrichtung (11) zurückzuführenden sprunghaften Druckänderung ($\Delta p_{gem}$) des während der jeweiligen Funktionsprüfung mittels des Drucksensors (1, 47) gemessenen Drucks ($p_{gem}$) und/oder anhand eines zeitlichen Verlaufs des während der jeweiligen Funktionsprüfung mittels des Drucksensors (1, 47) gemessenen Drucks ($p_{gem}$) überprüft wird.

13. Verfahren gemäß Anspruch 12, **dadurch gekennzeichnet, dass** bei mindestens einer Funktionsprüfung derart verfahren wird, dass

die Auslenkeinrichtung (11) während des Zeitraums (T) eine die Trennmembran (5) in Richtung deren Membranbett (39) auslenkende, konstante Kraft (K) ausübt, und
bei dieser Funktionsprüfung:

a) die als Druckanstieg ausgebildete auf die Aktivierung der Auslenkeinrichtung (11) zurückzuführende Druckänderung ($\Delta p_{gem}$) des gemessenen Drucks ($p_{gem}$) bestimmt wird, und

a1) eine reduzierte Steifigkeit der Trennmembran (5) als eine mögliche Ursache einer Funktionsbeeinträchtigung bestimmt wird, wenn der Druckanstieg einen hierfür vorgegebenen Grenzwert überschreitet,
a2) eine erhöhte Steifigkeit der Trennmembran (5) als eine mögliche Ursache einer Funktionsbeeinträchtigung bestimmt wird, wenn der Druckanstieg einen hierfür vorgegebenen Grenzwert unterschreitet,
a3) eine erhöhte Druckempfindlichkeit des Drucksensors (1) und/oder eine reduzierte Steifigkeit einer Messmembran (39) des Drucksensors (1) als eine mögliche Ursache einer Funktionsbeeinträchtigung bestimmt wird, wenn der Druckanstieg einen hierfür vorgegebenen Grenzwert überschreitet,
a4) eine reduzierte Kompressibilität der Druckübertragungsflüssigkeit als eine mögliche Ursache einer Funktionsbeeinträchtigung bestimmt wird, wenn der Druckanstieg einen hierfür vorgegebenen Grenzwert unterschreitet, und/oder

b) eine Undichtigkeit des Druckmessaufnehmers erkannt wird, wenn der gemessene Druck ($p_{gem}$) während des Zeitraums (T) ausgehend von einem Maximaldruck ($p_{max}$) um mehr als einen vorgegebenen Wert absinkt.

14. Druckmessaufnehmer gemäß Anspruch 1 bis 8, **dadurch gekennzeichnet, dass**

der Drucksensor (45) ein Differenzdrucksensor ist, dem ein zweiter Druckmittler (3) vorgeschaltet ist, der eine Trennmembran (5) umfasst, deren Außenseite mit einem zweiten Druck (p2) beaufschlagbar ist und unter der eine Druckempfangskammer (7) eingeschlossen ist, die an einen mit einer Druckübertragungsflüssigkeit gefüllten, hydraulischen Druckübertragungspfad (9) angeschlossen ist, der den auf die Außenseite der Trennmembran (5) einwirkenden zweiten Druck (p2) auf den Drucksensor (47) überträgt,
der zweite Druckmittler (3) eine elektronisch aktivierbare Auslenkeinrichtung (11) umfasst, die derart ausgebildet ist, dass sie im aktivierten Zustand eine konstante, die Trennmembran (5) des zweiten Druckmittlers (3) auslenkende Kraft auf die Trennmembran (5) oder ein mit der Trennmembran (5) verbundenes Element ausübt, und
der Druckmessaufnehmer eine Prüfeinrichtung (41) umfasst, die dazu ausgebildet ist Funktionsprüfungen des Druckmessaufnehmers durchzuführen, bei denen jeweils eine der beiden Auslenkeinrichtungen (11) für die Dauer eines vorgegeben Zeitraums (T) aktiviert wird und die Prüfeinrichtung (41) den Druckmessaufnehmer anhand des während der jeweiligen Funktionsprüfung mittels des Drucksensors (47) gemessenen Differenzdrucks, anhand einer auf die Aktivierung der jeweiligen Auslenkeinrichtung (11) zurückzuführenden sprunghaften Druckänderungen des während der jeweiligen Funktionsprüfung mittels des Drucksensors (47) gemessenen Differenzdrucks und/oder anhand eines zeitlichen Verlaufs des während der jeweiligen Funktionsprüfung mittels des Drucksensors (47) gemessenen Differenzdrucks überprüft.

15. Druckmessaufnehmer gemäß Anspruch 14, **dadurch gekennzeichnet**, das

die Trennmembranen (5) magnetisch oder ferromagnetisch sind oder mit einem magnetischen oder ferromagnetischen Element verbunden sind,

jede Auslenkeinrichtung (11) jeweils einen elektronisch aktivierbaren Elektromagnet (13) umfasst, der im aktivierten Zustand die die jeweilige Trennmembran (5) auslenkende Kraft (K) auf die Trennmembran (5) oder das damit verbundene Element ausübt,

der Druckmessaufnehmer für jeden Elektromagnet (13) jeweils eine an den Elektromagneten (13) anschließbare oder angeschlossene Auslenkungsmessschaltung (45) umfasst, die derart ausgebildet ist, dass sie eine von dem auf die Trennmembran (5) einwirkenden Druck (p, p2) abhängige Auslenkung der Trennmembran (5) bei deaktivierter Auslenkeinrichtung (11) anhand einer von der Auslenkung der Trennmembran (5) abhängigen Eigenschaft des Elektromagneten (13), anhand der Induktivität (L) des Elektromagneten (13) oder anhand einer von der Induktivität (L) des Elektromagneten (13) abhängigen Größe bestimmt, und

die Prüfeinrichtung (41) derart ausgebildet ist, dass sie die Funktionsfähigkeit und/oder die Messgenauigkeit des Druckmessaufnehmer anhand des gemessenen Differenzdrucks und der Differenz der mittels der beiden Auslenkungsmessschaltungen (45) gemessenen Auslenkungen der beiden Trennmembranen (5) überprüft, während beide Auslenkeinrichtungen (11) deaktiviert sind.

**Claims**

1. A pressure gauge, comprising

a pressure sensor (1, 47),
a diaphragm seal (3), which is connected upstream of the pressure sensor (1, 47) and which comprises an isolation diaphragm (5), the outer side of which can be exposed to a pressure (p) and under which a pressure receiving chamber (7) is enclosed, and
a hydraulic pressure transmission path (9), which is connected to the pressure receiving chamber (7), is filled with a pressure transmitting fluid, and which transmits the pressure (p) acting on the outer side of the isolation diaphragm (5) to the pressure sensor (1, 47),
the diaphragm seal (3) comprising an electronically activatable deflection device (11), which is designed such that, when activated, it exerts on the isolation diaphragm (5) or on an element connected to the isolation diaphragm (5) a constant force to deflect the isolation diaphragm (5), the isolation diaphragm (5) being magnetic or ferromagnetic or being connected to a magnetic or ferromagnetic element, and
the deflection device (11) comprising an electronically activatable electromagnet (13), which, when activated, exerts on the isolation diaphragm (5) or on the element connectable or connected thereto the force (K) to deflect the isolation diaphragm (5), **wherein**
a deflection measuring circuit (45) which is connectable or connected to the electromagnet (13) and is designed in such a way that it determines a deflection of the isolation diaphragm (5) dependent on the pressure (p) acting on the isolation diaphragm (5) when the deflection device (11) is deactivated, on the basis of a property of the electromagnet (13) dependent on the deflection of the isolation diaphragm (5), on the basis of an inductance (L) of the electromagnet (13), or on the basis of a variable dependent on the inductance (L) of the electromagnet (13); and
a testing device (41), which is designed in such a way that it checks the functioning and/or the measuring accuracy of the pressure gauge when the deflection device (11) is deactivated, on the basis of the pressure ($p_{gem}$) measured by the pressure sensor (1) and the deflection of the isolation diaphragm (5) determined parallel thereto by means of the deflection measuring circuit (45).

2. The pressure gauge as claimed in claim 1, wherein the isolation diaphragm (5) consists at least in portions or as a whole of a magnetic material, of a ferromagnetic material, of a ferromagnetic steel, of a ferritic steel, of a duplex steel, or of a superduplex steel.

3. The pressure gauge as claimed in claim 1, wherein the magnetic or ferromagnetic element connected to the isolation diaphragm (5) comprises a disk (15) arranged on an inner side of the isolation diaphragm (5) facing into the pressure receiving chamber, the disk (15)

a) consisting of a magnetic or ferromagnetic material, of a magnetic or ferromagnetic metal alloy, of a ferromagnetic steel, of a ferritic steel, of a duplex steel, of a superduplex steel, of iron, of cast iron, of a magnetic or ferromagnetic ceramic, of a ferritic ceramic, or of an iron oxide,
b) being applied as a coating or as a galvanic coating to the isolation diaphragm (5) or being connected to the isolation diaphragm (5) by joining or soldering,
c) having a disk thickness from 0.1 $\mu$m to 500 $\mu$m when the isolation diaphragm (5) has a material thickness from 25 $\mu$m to 200 $\mu$m, having a disk thickness from 0.1 $\mu$m to 300 $\mu$m when the isolation diaphragm (5) has a material thickness from 25 $\mu$m to 100 $\mu$m, or having a disk thickness from 10 $\mu$m to 500 $\mu$m when the isolation diaphragm (5) has a material thickness from 50 $\mu$m to 200 $\mu$m, and/or
d) having a diameter which is smaller than a diameter of the isolation diaphragm (5) and/or having a diameter from 2 mm to 15 mm when the isolation diaphragm (5) has a diameter from 20 mm to 90 mm, the disk (15) being arranged concentrically with respect to the isolation diaphragm (5).

4. The pressure gauge as claimed in claim 1, wherein the element connected to the isolation diaphragm comprises a permanent magnet (17) mounted on an inner side of the isolation diaphragm (5) facing into the pressure receiving chamber (7).

5. The pressure gauge as claimed in claim 4, wherein the permanent magnet (17) extends into an end region of the pressure transmission path (9) adjacent to the pressure receiving chamber (7), the pressure transmission path being surrounded externally at least in portions by a coil (25) of the electromagnet (15).

6. The pressure gauge as claimed in claim 1 to 5, wherein the electromagnet (13) is integrated in the diaphragm seal (3),

the electromagnet (13) comprises a coil (25) that can be connected to a direct current source ($I_{DC}$) via an electronically controllable switching device (27),
the coil (25) is oriented such that an extension of its longitudinal axis runs parallel to the surface normal of the isolation diaphragm (5) through the center of the isolation diaphragm (5),
the coil (25) is arranged in such a way that it surrounds, externally on all sides, a portion of the pressure transmission path (9) running from the pressure receiving chamber (7) to the pressure sensor (1, 47), and/or
the electromagnet (13) comprises a hollow-cylindrical core (29) which is surrounded at least in portions by the coil (25) and through which an end region of the hydraulic pressure transmission path (9) leading into the pressure receiving chamber (9) runs.

7. The pressure gauge as claimed in claim 1 to 6, wherein the pressure gauge comprises a testing device (41) which is designed to carry out function tests of the pressure gauge in which the deflection device (11) is activated for a predetermined period (T) and the testing device (41) checks the pressure gauge on the basis of a pressure ($p_{gem}$) measured during the respective function test by means of the pressure sensor (1, 47).

8. The pressure gauge as claimed in claim 7, wherein

the testing device (41) is designed in such a way that it determines, on the basis of the pressure($p_{gem}$) measured by means of the pressure sensor (1, 47) during the respective function test, a sudden pressure change ($\Delta p_{gem}$) in the measured pressure ($p_{gem}$) attributable to the activation of the deflection device (13), and
the testing device (41) is designed in such a way that it

a) determines a function impairment of the pressure gauge when the pressure change ($\Delta p_{gem}$) deviates from a reference value (R) predetermined for this purpose by more than a predetermined tolerance, and/or,
b) on the basis of the difference between the pressure change ($\Delta p_{gem}$) and the reference value (R), checks a measuring accuracy of the pressure gauge, outputs an impairment of the measuring accuracy when the absolute value of the difference exceeds a predetermined limit value, and/or determines and outputs a degree of impairment of the measuring accuracy on the basis of the absolute value of the difference.

9. The pressure gauge as claimed in claim 7 or 8, wherein

the deflection device (11) is designed such that, when activated, it exerts a constant force (K) deflecting the isolation diaphragm (5) in a direction of a diaphragm bed (39) of the isolation diaphragm,

the testing device (41) is designed in such a way that, on the basis of the pressure ($p_{gem}$) measured by means of the pressure sensor (1) during the respective function test, it determines a pressure change ($\Delta p_{gem}$) in the measured pressure ($p_{gem}$) in the form of a pressure increase and attributable to the activation of the deflection device (11), and

the testing device (41) is designed in such a way that it:

a) outputs a reduced stiffness of the isolation diaphragm (5) as a possible cause of a function impairment if the pressure increase exceeds a limit value predetermined for this purpose,

b) outputs an increased stiffness of the isolation diaphragm (5) as a possible cause of a function impairment if the pressure increase falls below a limit value predetermined for this purpose,

c) outputs an increased pressure sensitivity of the pressure sensor (1) and/or a reduced stiffness of a measuring diaphragm (31) of the pressure sensor (1) as a possible cause of a function impairment if the pressure increase exceeds a limit value predetermined for this purpose, and/or

d) outputs a reduced compressibility of the pressure transmitting fluid as a possible cause of a function impairment if the pressure increase falls below a limit value predetermined for this purpose.

10. The pressure gauge as claimed in claim 7 to 9, wherein the testing device (41) is designed in such a way that it compares a time curve of the pressure ($p_{gem}$) measured during the function test with a reference curve predetermined for this purpose, and/or, on the basis of the time curve, derives at least one characteristic variable dependent on the time curve and compares the at least one characteristic variable with a predetermined reference value, and identifies a function impairment if the curve deviates from the reference curve by more than a predetermined extent and/or the characteristic variable deviates from the reference value by more than a predetermined extent.

11. The pressure gauge as claimed in claim 7 to 10, wherein

the deflection device (11) is designed in such a way that, when activated, it exerts a constant force (K) deflecting the isolation diaphragm (5) in a direction of the diaphragm bed (39) of the isolation diaphragm, and

the testing device (41) is designed in such a way that it identifies and outputs a leak of the pressure gauge when the measured pressure ($p_{gem}$) falls from a maximum pressure ($p_{max}$) by more than a predetermined value during the period (T).

12. A method for testing a function of a pressure gauge as claimed in claim 1 to 11, wherein at least one function test is performed, in which

the deflection device (11) is activated for the duration of a predetermined period (T), and the function of the pressure gauge is checked on the basis of the pressure ($p_{gem}$) measured during the respective function test by means of the pressure sensor (1, 47), on the basis of a sudden pressure change ($\Delta p_{gem}$), attributable to the activation of the deflection device (11), in the pressure ($p_{gem}$) measured during the respective function test by means of the pressure sensor (1, 47), and/or on the basis of a time curve of the pressure ($p_{gem}$) measured during the respective function test by means of the pressure sensor (1, 47).

13. The method as claimed in claim 12, wherein, during at least one function test, the method proceeds in such a way that

the deflection device (11), during the period (T), exerts a constant force (K) deflecting the isolation diaphragm (5) in a direction of a diaphragm bed (39) of the isolation diaphragm, and during this function test:

a) the pressure change ($\Delta p_{gem}$) in the measured pressure ($p_{gem}$) in the form of a pressure increase and attributable to the activation of the deflection device (11) is determined, and

a1) a reduced stiffness of the isolation diaphragm (5) is determined as a possible cause of a function impairment if the pressure increase exceeds a limit value predetermined for this purpose,

a2) an increased stiffness of the isolation diaphragm (5) is determined as a possible cause of a function impairment if the pressure increase falls below a limit value predetermined for this purpose,

a3) an increased pressure sensitivity of the pressure sensor (1) and/or a reduced stiffness of a measuring diaphragm (39) of the pressure sensor (1) is determined as a possible cause of a function impairment if the pressure increase exceeds a limit value predetermined for this purpose,

a4) a reduced compressibility of the pressure transmitting fluid is determined as a possible cause of a function impairment if the pressure increase falls below a limit value predetermined for this purpose, and/or

b) a leak of the pressure gauge is identified when the measured pressure ($p_{gem}$) falls from a maximum pressure ($p_{max}$) by more than a predetermined value during the period (T).

14. The pressure gauge as claimed in claim 1 to 8, wherein

the pressure sensor (45) is a differential pressure sensor, upstream of which there is arranged a second diaphragm seal (3), which comprises an isolation membrane (5), the outer side of which can be exposed to a second pressure (p2) and under which a pressure receiving chamber (7) is enclosed, which is connected to a hydraulic pressure transmission path (9), which is filled with a pressure transmitting fluid and which transmits the second pressure (p2) acting on the outer side of the isolation diaphragm (5) to the pressure sensor (47),

the second diaphragm seal (3) comprises an electronically activatable deflection device (11), which is designed such that, when activated, it exerts on the isolation diaphragm (5) or on an element connected to the isolation diaphragm (5) a constant force to deflect the isolation diaphragm (5) of the second diaphragm seal (3), and

the pressure gauge comprises a testing device (41), which is designed to carry out function tests of the pressure gauge, in each of which one of the two deflection devices (11) is activated for the duration of a predetermined period (T) and the testing device (41) checks the pressure gauge on the basis of the differential pressure measured by means of the pressure sensor (47) during the respective function test, on the basis of a sudden pressure change, attributable to the activation of the respective deflection device (11), in the differential pressure measured during the respective function test by means of the pressure sensor (47), and/or on the basis of a time curve of the differential pressure measured during the respective function test by means of the pressure sensor (47).

15. The pressure gauge as claimed in claim 14, wherein

the isolation diaphragms (5) are magnetic or ferromagnetic or are connected to a magnetic or ferromagnetic element,

each deflection device (11) comprises an electronically activatable electromagnet (13), which, when activated, exerts on the isolation diaphragm (5) or on the element connected thereto the force (K) to deflect the respective isolation diaphragm (5),

the pressure gauge for each electromagnet (13) comprises a deflection measuring circuit (45) which is connectable or connected to the electromagnet (13) and is designed in such a way that it determines a deflection of the isolation diaphragm (5) dependent on the pressure (p, p2) acting on the isolation diaphragm (5) when the deflection device (11) is deactivated, on the basis of a property of the electromagnet (13) dependent on the deflection of the isolation diaphragm (5), on the basis of an inductance (L) of the electromagnet (13), or on the basis of a variable dependent on the inductance (L) of the electromagnet (13), and

the testing device (41) is designed in such a way that it checks the functioning and/or the measuring accuracy of the pressure gauge on the basis of the measured differential pressure and the difference in the deflections of the two isolation diaphragms (5) measured by means of the two deflection measuring circuits (45), whilst both deflection devices (11) are deactivated.

## Revendications

1. Transmetteur de pression, avec

un capteur de pression (1, 47),

un séparateur (3) monté en amont du capteur de pression (1, 47), lequel séparateur comprend une membrane de séparation (5) dont la face extérieure peut être soumise à une pression (p) et sous laquelle est enfermée une chambre de réception de pression (7), et

un chemin de transmission de pression hydraulique (9) raccordé à la chambre de réception de pression (7) et rempli d'un liquide de transmission de pression, lequel transmet la pression (p) agissant sur le côté extérieur de la membrane de séparation (5) au capteur de pression (1, 47), le séparateur (3) comprenant un dispositif de déviation (11) activable électroniquement, lequel est conçu de telle sorte qu'à l'état activé, il exerce une force constante, déviant la membrane de séparation (5), sur la membrane de séparation (5) ou sur un élément relié à la membrane de séparation (5),

la membrane de séparation (5) étant magnétique ou ferromagnétique ou étant reliée à un élément magnétique ou ferromagnétique, et

le dispositif de déviation (11) comprenant un électroaimant (13) activable électroniquement qui, à l'état activé, exerce la force (K), déviant la membrane de séparation (5), sur la membrane de séparation (5) ou sur l'élément relié à celle-ci, **caractérisé en ce que** le transmetteur comprend

un circuit de mesure de déviation (45) raccordable ou raccordé à l'électroaimant (13), lequel circuit est conçu de telle sorte à déterminer une déviation de la membrane de séparation (5) dépendant de la pression (p) agissant sur la membrane de séparation (5) lorsque le dispositif de déviation (11) est désactivé, à l'aide d'une propriété de l'électroaimant (13) dépendant de la déviation de la membrane de séparation (5), à l'aide d'une inductance (L) de l'électroaimant (13) ou à l'aide d'une grandeur dépendant de l'inductance (L) de l'électroaimant (13), et

un dispositif de contrôle (41), lequel est conçu de telle sorte à contrôler l'aptitude au fonctionnement et/ou la précision de mesure du capteur de pression lorsque le dispositif de déviation (11) est désactivé, à l'aide de la pression ($p_{gem}$) mesurée au moyen du capteur de pression (1) et de la déviation de la membrane de séparation (5) déterminée en parallèle au moyen du circuit de mesure de déviation (45).

2. Transmetteur de pression selon la revendication 1, **caractérisé en ce que** la membrane de séparation (5) est constituée au moins partiellement ou en totalité d'un matériau magnétique, d'un matériau ferromagnétique, d'un acier ferromagnétique, d'un acier ferritique, d'un acier duplex ou d'un acier superduplex.

3. Transmetteur de pression selon la revendication 1, **caractérisé en ce que** l'élément magnétique ou ferromagnétique relié à la membrane de séparation (5) comprend un disque (15) disposé sur une face interne de la membrane de séparation (5) orientée vers l'intérieur de la chambre de réception de pression (7), ledit disque (15)

a) étant en un matériau magnétique ou ferromagnétique, en un alliage métallique magnétique ou ferromagnétique, en un acier ferromagnétique, en un acier ferritique, en un acier duplex, en un acier superduplex, en fer, en fonte, en une céramique magnétique ou ferromagnétique, en une céramique ferritique ou en un oxyde de fer,
b) étant appliqué sur la membrane de séparation (5) sous forme de revêtement ou de revêtement galvanique, ou relié à la membrane de séparation (5) par un assemblage ou une soudure,
c) présentant, pour une épaisseur de matériau de la membrane de séparation (5) de 25 $\mu$m à 200 $\mu$m, une épaisseur de disque de 0,1 $\mu$m à 500 $\mu$m, présentant, pour une épaisseur de matériau de la membrane de séparation (5) de 25 $\mu$m à 100 $\mu$m, une épaisseur de disque de 0,1 $\mu$m à 300 $\mu$m, ou présentant, pour une épaisseur de matériau de la membrane de séparation (5) de 50 $\mu$m à 200 $\mu$m, une épaisseur de disque de 10 $\mu$m à 500 $\mu$m, et/ou
d) présentant un diamètre qui est inférieur à un diamètre de la membrane de séparation (5) et/ou présentant un diamètre de 2 mm à 15 mm pour un diamètre de la membrane de séparation (5) de 20 mm à 90 mm, le disque (15) étant disposé de manière concentrique par rapport à la membrane de séparation (5).

4. Transmetteur de pression selon la revendication 1, **caractérisé en ce que** l'élément relié à la membrane de séparation (5) comprend un aimant permanent (17) monté sur une face interne de la membrane de séparation (5) orientée vers la chambre de réception de pression (7).

5. Transmetteur de pression selon la revendication 4, **caractérisé en ce que** l'aimant permanent (17) s'étend dans une zone d'extrémité du chemin de transmission de pression (9) adjacente à la chambre de réception de pression (7), lequel chemin est entouré du côté extérieur au moins partiellement par une bobine (25) de l'électroaimant (15).

6. Transmetteur de pression selon les revendications 1 à 5, **caractérisé en ce que**

l'électroaimant (13) est intégré dans le séparateur (3),
l'électroaimant (13) comprend une bobine (25) pouvant être raccordée à une source de courant continu ($I_{DC}$) par l'intermédiaire d'un dispositif de commutation (27) à commande électronique, la bobine (25) est disposée de telle sorte qu'elle entoure de tous côtés, à l'extérieur, une section du chemin de transmission de pression (9) s'étendant de la chambre de réception de pression (7) au capteur de pression (1, 47), et/ou l'électroaimant (13) comprend un noyau cylindrique creux (29) entouré au moins partiellement par la bobine (25), noyau à travers lequel s'étend une zone d'extrémité du chemin de transmission de pression hydraulique (9) débouchant dans la chambre de réception de pression (9).

**7.** Transmetteur de pression selon les revendications 1 à 6, **caractérisé en ce que** le transmetteur de pression comprend un dispositif de contrôle (41), lequel est conçu pour effectuer des contrôles de fonctionnement du transmetteur de pression, contrôles lors desquels le dispositif de déviation (11) est activé à chaque fois pour la durée d'un intervalle de temps (T) prédéfini et le dispositif de contrôle (41) contrôle le transmetteur de pression à l'aide de la pression ($p_{gem}$) mesurée pendant le contrôle de fonctionnement respectif au moyen du capteur de pression (1, 47).

**8.** Transmetteur de pression selon la revendication 7, **caractérisé**

en ce que le dispositif de contrôle (41) est conçu de telle sorte à déterminer, à l'aide de la pression ($p_{gem}$) mesurée pendant le contrôle de fonctionnement respectif au moyen du capteur de pression (1, 47), une variation de pression brusque ($\Delta p_{gem}$) de la pression mesurée ($p_{gem}$), due à l'activation du dispositif de déviation (13), et en ce que le dispositif de contrôle (41) est conçu de telle sorte à

a) constater une altération du fonctionnement du transmetteur de pression lorsque la variation de pression ($\Delta p_{gem}$) s'écarte d'une valeur de référence (R) prédéfinie à cet effet de plus d'une tolérance prédéfinie, et/ou
b) vérifier, à l'aide de la différence entre la variation de pression ($\Delta p_{gem}$) et la valeur de référence (R), une précision de mesure du transmetteur de pression, à délivrer une altération de la précision de mesure lorsque la valeur de la différence dépasse une valeur limite prédéfinie, et/ou à déterminer et délivrer, à l'aide de la valeur de la différence, un degré d'altération de la précision de mesure.

**9.** Transmetteur de pression selon les revendications 7 à 8, **caractérisé en ce que**

le dispositif de déviation (11) est conçu de telle sorte qu'il exerce, à l'état activé, une force constante (K) déviant la membrane de séparation (5) en direction de son lit de membrane (39), le dispositif de contrôle (41) est conçu de telle sorte qu'il détermine, à l'aide de la pression ($p_{gem}$) mesurée pendant le contrôle de fonctionnement respectif au moyen du capteur de pression (1), une variation de pression ($\Delta p_{gem}$) de la pression mesurée ($p_{gem}$), réalisée sous forme d'augmentation de pression et due à l'activation du dispositif de déviation (11), et le dispositif de contrôle (41) est réalisé de telle sorte qu'il indique :

a) une rigidité réduite de la membrane de séparation (5) comme cause possible d'une altération du fonctionnement, lorsque l'augmentation de la pression dépasse une valeur limite prédéfinie à cet effet,
b) une rigidité accrue de la membrane de séparation (5) comme cause possible d'une altération du fonctionnement, lorsque l'augmentation de la pression est inférieure à une valeur limite prédéfinie à cet effet,
c) une sensibilité accrue à la pression du capteur de pression (1) et/ou une rigidité réduite d'une membrane de mesure (31) du capteur de pression (1) comme cause possible d'une altération du fonctionnement, lorsque l'augmentation de la pression dépasse une valeur limite prédéfinie à cet effet, et/ou
d) une compressibilité réduite du liquide de transmission de pression comme cause possible d'une altération du fonctionnement, lorsque l'augmentation de pression est inférieure à une valeur limite prédéfinie à cet effet.

**10.** Transmetteur de pression selon les revendications 7 à 9, **caractérisé en ce que** le dispositif de contrôle (41) est conçu de telle sorte qu'il compare une courbe temporelle de la pression ($p_{gem}$) mesurée pendant le contrôle de fonctionnement à une courbe de référence prédéfinie à cet effet et/ou qu'il déduit, à l'aide de la courbe temporelle, au moins une grandeur caractéristique dépendant de la courbe temporelle et qu'il la compare à une valeur de référence prédéfinie à cet effet et qu'il détecte une altération du fonctionnement lorsque la courbe s'écarte de la courbe de référence de plus d'une mesure prédéfinie et/ou que la grandeur caractéristique s'écarte de la valeur de référence de plus d'une mesure prédéfinie.

**11.** Transmetteur de pression selon les revendications 7 à 10, **caractérisé**

en ce que le dispositif de déviation (11) est conçu de telle sorte qu'il exerce, à l'état activé, une force constante (K) déviant la membrane de séparation (5) en direction de son lit de membrane (39), et en ce que le dispositif de contrôle (41) est conçu de telle sorte qu'il détecte et délivre un défaut d'étanchéité du transmetteur de pression lorsque la pression mesurée ($p_{gem}$) diminue de plus d'une valeur prédéfinie pendant l'intervalle de temps (T) à partir d'une pression maximale ($p_{max}$).

**12.** Procédé destiné au contrôle de fonctionnement d'un transmetteur de pression selon les revendications 1 à 11, **caractérisé en ce qu'**au moins un contrôle de fonctionnement est effectué, procédé pour lequel

le dispositif de déviation (11) est activé pendant la durée d'un intervalle de temps (T) prédéfini, et le fonctionnement du transmetteur de pression est contrôlé à l'aide de la pression mesurée pendant le contrôle de fonctionnement respectif au moyen du capteur de pression (1, 47), à l'aide d'une variation brusque de la pression ($\Delta p_{gem}$), laquelle variation est due à l'activation du dispositif de déviation (11), à l'aide de la pression ($p_{gem}$) mesurée au moyen du capteur de pression (1, 47) pendant le contrôle de fonctionnement respectif et/ou à l'aide d'une courbe temporelle de la pression ($p_{gem}$) mesurée au moyen du capteur de pression (1, 47) pendant le contrôle de fonctionnement respectif.

**13.** Procédé selon la revendication 12, **caractérisé en ce que**, lors d'au moins un contrôle de fonctionnement, on procède de telle sorte que

le dispositif de déviation (11) exerce pendant l'intervalle de temps (T) une force constante (K) déviant la membrane de séparation (5) en direction de son lit de membrane (39), et lors de ce contrôle de fonctionnement :

a) la variation de pression ($\Delta p_{gem}$) de la pression mesurée ($p_{gem}$), réalisée sous forme d'augmentation de pression et due à l'activation du dispositif de déviation (11), est déterminée, et

a1) une rigidité réduite de la membrane de séparation (5) est déterminée comme une cause possible d'une altération du fonctionnement, lorsque l'augmentation de pression dépasse une valeur limite prédéfinie à cet effet, a2) une rigidité accrue de la membrane de séparation (5) est déterminée comme une cause possible d'une altération du fonctionnement, lorsque l'augmentation de pression est inférieure à une valeur limite prédéfinie à cet effet, a3) une sensibilité accrue à la pression du capteur de pression (1) et/ou une rigidité réduite d'une membrane de mesure (39) du capteur de pression (1) est déterminée comme une cause possible d'une altération du fonctionnement, lorsque l'augmentation de pression dépasse une valeur limite prédéfinie à cet effet, a4) une compressibilité réduite du liquide de transmission de pression est déterminée comme une cause possible d'une altération du fonctionnement, lorsque l'augmentation de pression est inférieure à une valeur limite prédéfinie à cet effet, et/ou

b) un défaut d'étanchéité du transmetteur de pression est détecté lorsque la pression mesurée ($p_{gem}$) diminue de plus d'une valeur prédéfinie pendant l'intervalle de temps (T) à partir d'une pression maximale ($p_{max}$).

**14.** Procédé selon les revendications 1 à 8, **caractérisé en ce que**

le capteur de pression (47) est un capteur de pression différentielle en amont duquel est monté un deuxième séparateur (3), lequel séparateur comprend une membrane de séparation (5) dont la face extérieure peut être soumise à une deuxième pression (p2) et sous laquelle est enfermée une chambre de réception de pression (7), laquelle chambre est raccordée à un chemin de transmission de pression hydraulique (9) rempli d'un liquide de transmission de pression, lequel transmet au capteur de pression (47) la deuxième pression (p2) agissant sur le côté extérieur de la membrane de séparation (5), le deuxième séparateur (3) comprend un dispositif de déviation (11) activable électroniquement, lequel dispositif est conçu de telle sorte qu'il exerce, à l'état activé, une force constante, déviant la membrane de séparation (5) du deuxième séparateur (3), sur la membrane de séparation (5) ou sur un élément relié à la membrane de séparation (5), et le transmetteur de pression comprend un dispositif de contrôle (41), lequel est conçu pour effectuer des contrôles de fonctionnement du transmetteur de pression, contrôles lors desquels respectivement l'un des deux dispositifs de déviation (11) est activé pendant la durée d'un intervalle de temps (T) prédéfini et le dispositif de contrôle (41) contrôle le transmetteur de pression à l'aide de la pression différentielle mesurée par le capteur de pression (47) pendant le contrôle de fonctionnement respectif, à l'aide d'une variation de pression brusque, due à l'activation du dispositif de déviation (11) respectif, de la pression différentielle mesurée au moyen du capteur de pression (47) pendant le contrôle de fonctionnement respectif et/ou à l'aide d'une courbe temporelle de la pression différentielle mesurée au moyen du capteur de pression (47) pendant le contrôle de fonctionnement respectif.

**15.** Transmetteur de pression selon la revendication 14, **caractérisé en ce que**

les membranes de séparation (5) sont magnétiques ou ferromagnétiques ou sont reliées à un élément magnétique ou ferromagnétique,

chaque dispositif de déviation (11) comprend respectivement un électroaimant (13) activable électroniquement, lequel électroaimant exerce, à l'état activé, la force (K) - déviant la membrane de séparation respective (5) - sur la membrane de séparation (5) ou sur l'élément relié à celle-ci,

le transmetteur de mesure de pression pour chaque électroaimant (13) comprend respectivement un circuit de mesure de déviation (45) raccordable ou raccordé à l'électroaimant (13), lequel circuit est conçu de telle sorte à ce qu'il détermine une déviation de la membrane de séparation (5) dépendant de la pression (p, p2) agissant sur la membrane de séparation (5) lorsque le dispositif de déviation (11) est désactivé, à l'aide d'une propriété de l'électroaimant (13) dépendant de la déviation de la membrane de séparation (5), à l'aide de l'inductance (L) de l'électroaimant (13) ou à l'aide d'une grandeur dépendant de l'inductance (L) de l'électroaimant (13), et

le dispositif de contrôle (41) est conçu de telle sorte qu'il contrôle l'aptitude au fonctionnement et/ou la précision de mesure du transmetteur de pression à l'aide de la pression différentielle mesurée et de la différence des déviations des deux membranes de séparation (5) mesurées au moyen des deux circuits de mesure de déviation (45), pendant que les deux dispositifs de déviation (11) sont désactivés.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- DE 102007016792 A1
- DE 19601078 A1
- DE 102005055285 A1
- WO 2005026682 A1
- US 2007095146 A1
- DE 102010035965 A1
- US 3492872 A
- DE 3106835 A1